(19) **Europäisches Patentamt**

**European Patent Office**

**Office européen des brevets**

(11) **EP 1 505 271 B1**

(12) **EUROPEAN PATENT SPECIFICATION**

(45) Date of publication and mention
of the grant of the patent:
**28.12.2005 Bulletin 2005/52**

(51) Int Cl.⁷: **F01N 3/20**, F01N 11/00

(21) Application number: **04018631.4**

(22) Date of filing: **05.08.2004**

(54) **Reducing agent supply error detecting method for an exhaust gas control catalyst and corresponding detecting apparatus**

Methode zur Bestimmung eines Reduktionsmittelzufuhrfehlers bei einem Abgasreinigungskatalysator sowie entsprechende Vorrichtung

Procédé de détection d'erreur d'alimentation d'un agent réducteur pour un catalyseur d'échappement ainsi qu'un tel dispositif

(84) Designated Contracting States:
**DE ES FR GB IT**

(30) Priority: **06.08.2003 JP 2003287894**

(43) Date of publication of application:
**09.02.2005 Bulletin 2005/06**

(73) Proprietor: **Toyota Jidosha Kabushiki Kaisha
Toyota-shi, Aichi-ken 471-8571 (JP)**

(72) Inventors:
 • **Uchida, Takahiro
 Toyota-shi Aichi-ken 471-8571 (JP)**
 • **Sugiyama, Tatsumasa
 Toyota-shi Aichi-ken 471-8571 (JP)**
 • **Ito, Yoshiyasu
 Toyota-shi Aichi-ken 471-8571 (JP)**
 • **Morikawa, Atsushi
 Toyota-shi Aichi-ken 471-8571 (JP)**

(74) Representative: **TBK-Patent
Bavariaring 4-6
80336 München (DE)**

(56) References cited:
 **EP-A- 1 176 292           EP-A- 1 176 295
 US-B1- 6 487 852**

 • **PATENT ABSTRACTS OF JAPAN vol. 2002, no. 12, 12 December 2002 (2002-12-12) & JP 2002 242663 A (TOYOTA MOTOR CORP), 28 August 2002 (2002-08-28)**

**Description**

BACKGROUND OF THE INVENTION

1. Field of the Invention

The invention relates to a reducing agent supply error detecting method and a reducing agent supply error detecting apparatus, for an exhaust gas control catalyst.

2. Description of the Related Art

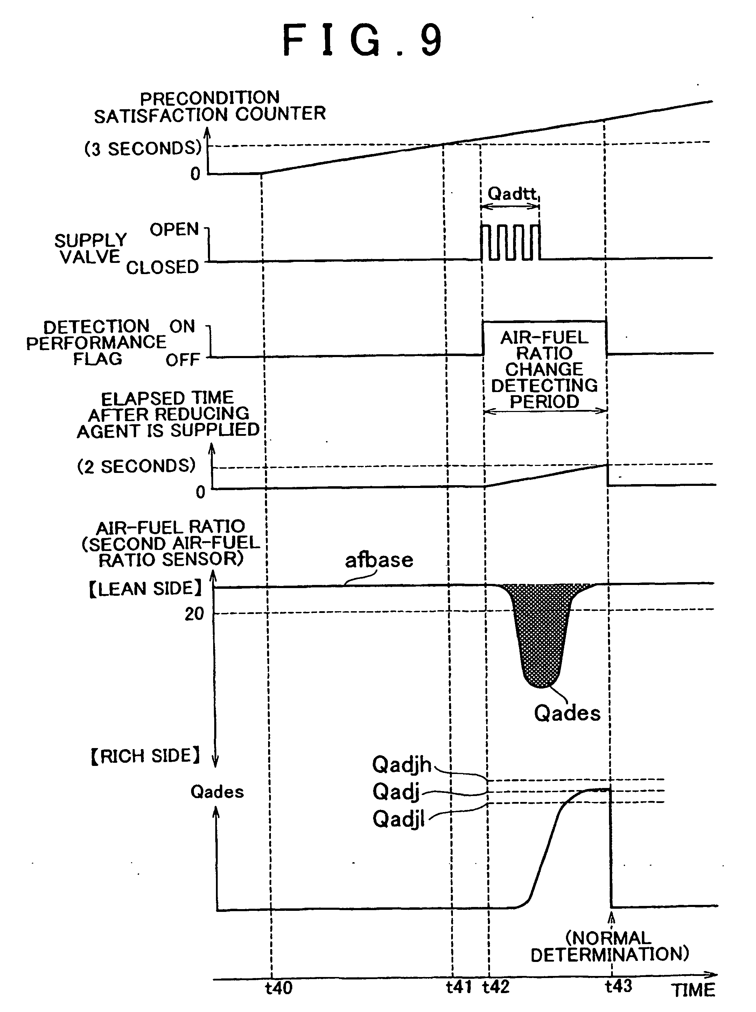

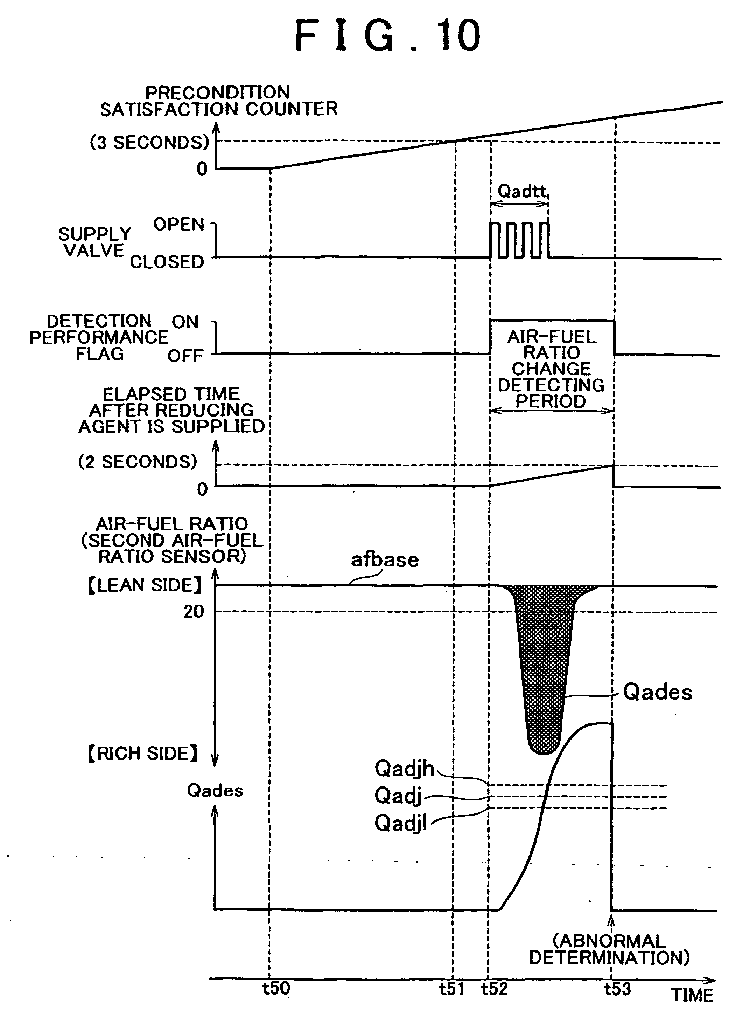

There is known an exhaust gas control system for an internal combustion engine, using a NOx storage reduction catalyst which stores NOx in exhaust gas in an oxidizing atmosphere, and which releases, reduces, and purifies the stored NOx when the atmosphere becomes a reducing atmosphere or when the atmosphere is forcibly changed to the reducing atmosphere. In such an exhaust gas control system, particularly, in a diesel engine or a lean-burn engine, there is a structure including a supply valve for supplying a reducing agent to an exhaust system in order to forcibly change the exhaust gas atmosphere to the reducing atmosphere, for example, as disclosed in Japanese Patent Laid-Open Publication No. 2002-242663 (refer to pages 13 to 14, FIGS. 9 and 10).

In this technology, an abnormality detecting system is suggested which performs NOx control appropriately, by detecting an abnormality that the amount of reducing agent supplied from the supply valve is insufficient and therefore NOx is not reduced sufficiently. An example of this abnormality detecting system is a system which determines that there is an abnormality in a supply valve when a value of an air-fuel ratio detected by an air-fuel ratio sensor is equal to a target air-fuel ratio or when the air-fuel ratio does not become lower than the target air-fuel ratio.

In the above-mentioned system, however, the target air-fuel ratio is simply used as a reference level for the air-fuel ratio, and whether there is an abnormality is determined based on whether the maximum decrease in the air-fuel ratio has reached the reference level. Accordingly, an abnormality that the supply valve is kept closed and cannot be opened, and the like can be detected. However, in the case of abnormalities such as an oversupply of reducing agent (i.e., the reducing agent whose amount is larger than an instructed amount is supplied), the air-fuel ratio reaches the target air-fuel ratio. Accordingly, even when there is an abnormality, it is determined that there is no abnormality.

When the supply of reducing agent is performed for a long time while the supply flow amount is kept small, the maximum decrease in the air-fuel ratio is small. Accordingly, even if the target amount of reducing agent is supplied in total, the air-fuel ratio does not reach the target air-fuel ratio. Therefore, ever when the instructed amount of reducing agent is supplied, it may be determined that there is an abnormality.

SUMMARY OF THE INVENTION

It is an object of the invention to accurately determine whether an abnormality has occurred in a supply valve by detecting a reducing agent supply error with high accuracy based on an air-fuel ratio.

An aspect of the invention relates to a reducing agent supply error detecting method for detecting an error between an amount of reducing agent which a reducing agent supply mechanism is instructed to supply (hereinafter, referred to as an "instructed supply amount which is given to a reducing agent supply mechanism) and an amount of reducing agent actually supplied from the reducing agent supply mechanism, when the reducing agent is supplied into an exhaust system by the reducing agent supply mechanism from the upstream of an exhaust gas control catalyst which is provided in the exhaust system of an internal combustion engine, in order to recover the purifying ability of the exhaust gas control catalyst through a reduction process. In this method, an estimated amount of reducing agent supplied from the reducing agent supply mechanism is obtained by periodically accumulating a value corresponding to a reducing agent supply amount (hereinafter, referred to as a "reducing agent supply amount corresponding value) which corresponds to a change amount in an air-fuel ratio in the exhaust system. A supply error is then detected by comparing the estimated supply amount with the instructed supply amount or a determination value based on the instructed supply amount.

When the reducing agent is supplied to the exhaust system, the air-fuel ratio in the exhaust system becomes lower than a base air-fuel ratio which is generated due to fuel for combustion in the internal combustion engine. If a determination is made based on a degree of the maximum decrease in the air-fuel ratio, a reducing agent supply error cannot be detected accurately, due to the fact that, even when the same amount of reducing agent is supplied in total, concentration distribution of the reducing agent changes according to a supply state and a state of the exhaust system, and therefore the maximum decrease in the air-fuel ratio fluctuates.

In the invention, however, the estimated supply amount is obtained by periodically accumulating a reducing agent supply amount corresponding value which corresponds to a change amount in the air-fuel ratio change, instead of using the maximum value of the air-fuel ratio decrease. Therefore, the total supply amount of reducing agent can be obtained with high accuracy. Accordingly, by comparing the estimated supply amount with the instructed supply amount which has caused the air-fuel ratio change or the determination value obtained based on the instructed supply amount, a supply error can be detected with high accuracy. It is therefore possible to make a determination concerning an abnormality and the like based on the supply error.

In the reducing agent supply error detecting method, when the supply error is out of a reference range, it may be determined that an abnormality has occurred in the reducing agent supply mechanism. By setting such a reference range and determining that an abnormality has occurred in the reducing agent supply mechanism if the supply error is out of the reference range, it is possible to make a determination concerning an abnormality easily and accurately.

Another aspect of the invention relates to a reducing agent supply error detecting apparatus which detects a difference between an instructed supply amount, which is given to a reducing agent supply mechanism, and an amount of reducing agent actually supplied from the reducing agent supply mechanism, in an internal combustion engine including an exhaust gas control catalyst provided in an exhaust system and the reducing agent supply mechanism which supplies the reducing agent to the exhaust system thereby recovering the purifying ability of the exhaust gas control catalyst through a reduction process. The reducing agent supply error detecting apparatus includes an air-fuel ratio sensor provided downstream from the reducing agent supply mechanism in the exhaust system; air-fuel ratio change detecting period setting means for setting an air-fuel ratio change detecting period which starts after a supply instruction is provided to the reducing agent supply mechanism; reducing agent estimated supply amount calculating means for calculating an estimated amount of reducing agent supplied from the reducing agent supply mechanism by periodically accumulating a reducing agent supply amount corresponding value that corresponds to a difference between a base air-fuel ratio and a first air-fuel ratio detected by the air-fuel ratio sensor during the air-fuel ratio change detecting period, using a second air-fuel ratio detected by the air-fuel ratio sensor before the start of the air-fuel ratio change detecting period set by the air-fuel ratio change detecting period setting means or a third air-fuel ratio which is lower than the second air-fuel ratio, as the base air-fuel ratio; and error detecting means for detecting a supply error by comparing the estimated supply amount calculated by the reducing agent estimated supply amount calculating means with the instructed supply amount, which is given to a reducing agent supply mechanism, or a determination value based on the instructed supply amount.

When the reducing agent is supplied to the exhaust system, the air-fuel ratio in the exhaust system becomes lower than a base air-fuel ratio which is generated due to fuel for combustion in the internal combustion engine. If a determination is made based on a degree of the maximum decrease in the air-fuel ratio, a reducing agent supply error cannot be detected accurately, due to the fact that, even when the same amount of reducing agent is supplied in total, concentration distribution of the reducing agent changes according to a supply state and a state of the exhaust system, and therefore the maximum decrease in the air-fuel ratio fluctuates.

In the invention, however, the reducing agent estimated supply amount calculating means calculates the estimated supply amount of reducing agent by periodically accumulating the reducing agent supply amount corresponding value which appears in the difference between the base air-fuel ratio and the air-fuel ratio detected by the air-fuel ratio sensor, during the air-fuel ratio change detecting period which is set by the air-fuel ratio change detecting period setting means in the above-mentioned manner.

Instead of using the maximum value of the air-fuel ratio decrease, the reducing agent supply amount corresponding value which corresponds to a change amount in the air-fuel ratio change is periodically accumulated. As a result, the estimated supply amount of reducing agent can be obtained with high accuracy. Therefore, the error detecting means can detect a supply error with high accuracy, by comparing the estimated supply amount with the instructed supply amount which has caused the air-fuel ratio change or the determination value based on the instructed supply amount. Based on the supply error, it is possible to make a determination concerning an abnormality and the like.

Further, in the reducing agent supply error detecting apparatus, the reducing agent estimated supply amount calculating means may calculate the reducing agent supply amount corresponding value based on the difference between the above-mentioned air-fuel ratios and an exhaust gas flow amount corresponding value which can be obtained according to an operation state of the internal combustion engine. When the state of the exhaust system, for example, the exhaust gas flow amount is considerably stable, the difference between the base air-fuel ratio and the first air-fuel ratio may be subjected to accumulation as the reducing agent supply amount corresponding value. However, when being calculated based on the difference between the base air-fuel ratio and the first air-fuel ratio and the exhaust gas flow amount corresponding value, the reducing agent supply amount corresponding value can be calculated more accurately as an actual reducing agent supply amount. Thus, the reducing agent supply amount corresponding value can be obtained more accurately. By accumulating the reducing agent supply amount corresponding value, the estimated supply amount can be obtained with higher accuracy.

In the reducing agent supply error detecting apparatus, the exhaust gas flow amount corresponding value may be an amount of air taken in the internal combustion engine (hereinafter, referred to as an "intake air amount of the internal combustion engine"). As the exhaust gas flow amount corresponding value, the exhaust gas flow amount, which is directly measured, may be used. Since the intake air amount is substantially proportional to the exhaust gas flow amount, the intake air amount of the internal combustion engine may be used as the exhaust gas flow amount corresponding value. In this manner, an accurately exhaust gas flow amount corresponding value can be obtained easily compared with the case where the exhaust gad flow amount is detected in high-temperature exhaust gas.

Further, in the reducing agent supply error detecting apparatus, there may be provided abnormality determining means for determining that an abnormality has occurred in the reducing agent supply mechanism when the supply error is out of a reference range. By providing such abnormality determining means, whether an abnormality has occurred may be determined based on the reference range. As described above, since the supply error is detected with high accuracy, a determination concerning an abnormality can be performed accurately.

Further, in the reducing agent supply error detecting apparatus, the error detecting means may correct the instructed supply amount or the determination value based on the intake air amount of the internal combustion engine, and use the corrected value. The exhaust gas flow amount changes according to the intake air amount. The effect of the reducing agent supply amount on the value detected by the air-fuel ratio sensor varies depending on the exhaust gas flow amount. Therefore, when the error detecting means corrects the instructed supply amount or the determination value based on the intake air amount of the internal combustion engine, and uses the corrected value, a determination concerning an abnormality can be prevented from being inaccurate.

Further, in the reducing agent supply error detecting apparatus, the error detecting means may correct the instructed supply amount or the determination value such that the instructed supply amount or the determination value decreases as the intake air amount of the internal combustion engine increases, and use the corrected value. As the intake air amount of the internal combustion engine increases, the exhaust gas flow amount increases, and therefore exhaust gas flows through the exhaust system at a high speed. At such a high speed, the air-fuel ratio sensor detects the air-fuel ratio as if the change amount in the air-fuel ratio due to the reducing agent supply were suppressed. Therefore, when the error detecting means corrects the instructed supply amount or the determination value such that as the intake air amount of the internal combustion engine increases, the instructed supply amount or the determination value decreases, and uses the corrected value, a determination concerning an abnormality can be prevented from being inaccurate.

Further, in the reducing agent supply error detecting apparatus, the error detecting means may correct the instructed supply amount or the determination value based on a temperature of the exhaust system of the internal combustion engine or a bed temperature of the exhaust gas control catalyst, and use the corrected value. The effect of the reducing agent supply amount on the value detected by the air-fuel ratio sensor varies depending on the temperature of the exhaust system of the internal combustion engine or the bed temperature of the exhaust gas control catalyst. Therefore, when the error detecting means corrects the instructed supply amount or the determination value based on the temperature of the exhaust system of the internal combustion engine or the bed temperature of the exhaust gas control catalyst, and uses the corrected value, a determination concerning an abnormality can be prevented from being inaccurate.

Further, in the reducing agent supply error detecting apparatus, the error detecting means may correct the instructed supply amount or the determination value such that the instructed supply amount or the determination value decreases as the temperature of the exhaust system of the internal combustion engine or the bed temperature of the exhaust gas control catalyst decreases. If the temperature of the exhaust system or the bed temperature of the exhaust gas control catalyst is low, the supplied reducing agent adheres to an exhaust passage and the like and the inside of the exhaust gas control catalyst. Then, the air-fuel ratio sensor detects the air-fuel ratio as if the change amount in the air-fuel ratio due to the reducing agent supply were suppressed. Accordingly, when the error detecting means corrects the instructed supply amount or the determination value such that the instructed supply amount or the determination value decreases as the temperature of the exhaust system of the internal combustion engine or the bed temperature of the exhaust gas control catalyst decreases, and uses the corrected value, a determination concerning an abnormality can be prevented from being inaccurate.

Further, in the reducing agent supply error detecting apparatus, the internal combustion engine may be provided with a normal combustion mode, in which exhaust gas is re-circulated normally, and a low temperature combustion mode, in which combustion is performed at a low temperature compared with the normal combustion mode by re-circulating exhaust gas whose amount is large compared with the normal combustion mode. The error detecting means may correct the instructed supply amount or the determination value depending on the combustion mode of the internal combustion engine, and use the corrected value. The amount of re-circulated exhaust gas largely varies between the low temperature combustion mode and the normal combustion mode. In the low temperature combustion mode, part of the reducing agent may flow to the exhaust gas re-circulation side due to re-circulation of a large amount of exhaust gas. In the low temperature combustion mode, there is the effect of flow of part of the reducing agent on the value detected by the air-fuel ratio sensor, which is different from in the normal combustion mode. Therefore, when the error detecting means corrects the instructed supply amount or the determination value depending on the combustion mode of the internal combustion engine, and uses the corrected value, a determination concerning an abnormality can be prevented from being inaccurate.

Further, in the reducing agent supply error detecting apparatus, the error detecting means may correct the instructed supply amount or the determination value such that the instructed supply amount or the determination value in the low temperature combustion mode is smaller than that in the normal combustion mode. As described above, in the low temperature combustion mode, part of the supplied reducing agent may flow to the exhaust gas re-circulation side. Therefore, when the error detecting means corrects the instructed supply amount or the determination value such that the instructed supply amount or the determination value in the low temperature combustion mode is smaller than that in the normal combustion mode, and uses the corrected value, the accuracy of detection of a supply error can be maintained at a high level, and therefore a determination concerning an abnormality can be prevented from being inaccurate.

Further, in the reducing agent supply error detecting apparatus, in the case where the instructed supply amount or the determination value is smaller than a reference supply amount, the abnormality determining means need not determine that an abnormality has occurred in the reducing agent supply mechanism even when the supply error becomes lower than the lower limit of the reference range. When the supply amount of reducing agent is small, the accuracy of detection performed by the air-fuel ratio sensor tends to be reduced. Therefore, when the instructed supply amount or the determination value is smaller than the reference supply amount, the abnormality determining means does not determine that an abnormality has occurred in the reducing agent supply mechanism even when the supply error becomes lower than the lower limit of the reference range, thereby preventing a determination concerning an abnormality being inaccurate.

Further, in the reducing agent supply error detecting apparatus, when a new supply instruction is provided to the reducing agent supply mechanism during the air-fuel ratio change detecting period, the process performed by the reducing agent estimated supply amount calculating means, the error detecting means or the abnormality determining means may be stopped. If the reducing agent supply corresponding to the next instructed supply amount appears in the air-fuel ratio while the reducing agent supply corresponding to the present instructed supply amount is appearing in the air-fuel ratio, whether the reducing agent supply corresponds to the present instructed supply amount or the next instructed supply amount cannot be determined based on the value detected by the sensor. Accordingly, an accurate estimated supply amount cannot be obtained. Therefore, when the new supply instruction is provided to the reducing agent supply mechanism during the air-fuel ratio change detecting period, the process performed by the reducing agent estimated supply amount calculating means, the error detecting means or the abnormality determining means is stopped. As a result, reduction in the accuracy of supply error detection due to the inaccurate estimated supply amount can be prevented. Also, a determination concerning an abnormality can be prevented from being inaccurate.

Further, in the reducing agent supply error detecting apparatus, when a change amount in operation state of the internal combustion engine becomes larger than a reference change amount, the process performed by the reducing agent estimated supply amount calculating means, the error detecting means or the abnormality determining means may be stopped. When the operation state of the internal combustion engine fluctuates largely, the exhaust gas flow amount, the air-fuel ratio in exhaust gas and the other exhaust gas states largely fluctuate, thereby reducing the accuracy of detection performed by the air-fuel ratio sensor. Accordingly, the estimated supply amount is likely to be inaccurate. Therefore, when the change amount in operation state of the internal combustion engine becomes larger than the reference change amount, the process performed by the reducing agent estimated supply amount calculating means, the error detecting means or the abnormality determining means is stopped. As a result, reduction in the accuracy of supply error detection due to the inaccurate estimated supply amount can be prevented. Also, a determination concerning an abnormality can be prevented from being inaccurate.

Further, in the reducing agent supply error detecting apparatus, the change amount in the operation state of the internal combustion engine may be a change amount in the intake air amount of the internal combustion engine or a change amount in the amount of fuel burned in the internal combustion engine. The exhaust gas state is largely effected especially by the change amount in the intake air amount of the internal combustion engine and the change amount in the amount of fuel burned in the internal combustion engine. Therefore, when the change amount in the amount of intake air or the change amount in the amount of fuel burned in the internal combustion engine becomes larger than the reference change amount, the process performed by the reducing agent estimated supply amount calculating means, the error detecting means or the abnormality determining means is stopped. As a result, reduction in the accuracy of supply error detection due to the inaccurate estimated supply amount can be prevented. Also, a determination concerning an abnormality can be prevented from being inaccurate.

Further, in the reducing agent supply error detecting apparatus, during a period in which the effect of the previous reducing agent supply performed by the reducing agent supply mechanism remains on the air-fuel ratio, the process performed by the reducing agent estimated supply amount calculating means, the error detecting means or the error determining means may be stopped. Even if a supply instruction is newly made while the effect of the reducing agent supply according to the previous supply instruction remains on the air-fuel ratio, whether the reducing agent supply is according to the present supply instruction or the previous supply instruction cannot be determined based on the value detected by the air-fuel ratio sensor. Accordingly, an accurate estimated supply amount cannot be obtained. Therefore, even if a supply instruction is newly provided to the reducing agent supply mechanism while the effect of the previous reducing agent supply remains on the air-fuel ratio, the process performed by the reducing agent estimated supply amount calculating means, the error detecting means ore the abnormality determining means is stopped. As a result, reduction in the accuracy of supply error detection due to the inaccurate estimated supply amount can be prevented. Also, a determination concerning an abnormality can be prevented from being inaccurate.

Further, in the reducing agent supply error detecting apparatus, the period in which the effect of the previous reducing agent supply performed by the reducing agent supply mechanism remains on the air-fuel ratio may be set based on the time that has elapsed since the reducing agent is supplied previously or the intake air amount that has been accumulated since the reducing agent is supplied previously. The period in which the effect of the previous reducing agent supply remains on the air-fuel ratio is set based on the time elapsed since the reducing agent is supplied previously or the intake air amount that has been accumulated since the reducing agent is supplied previously, in consideration of evaporation of the adhering fuel or the exhaust gas flow amount in the exhaust system. As a result, reduction in the accuracy of supply error detection due to the inaccurate estimated supply amount can be prevented. Also, a determination concerning an abnormality can be prevented from being inaccurate.

Further, in the reducing agent supply error detecting apparatus, the air-fuel ratio sensor may be provided downstream from the exhaust gas control catalyst in the exhaust system. Since the air-fuel ratio sensor provided downstream from the exhaust gas control catalyst is exposed to the purified exhaust gas, it becomes difficult for the air-fuel ratio sensor to be affected by NOx and PM (particulate matter) in exhaust gas. Accordingly, detection can be performed more accurately. Particularly, when the estimated supply amount of reducing agent is obtained based on the difference between the air-fuel ratios, as in the invention, the effect of the accuracy of detection is large. Therefore, the supply error can be detected with higher accuracy, by using the data detected by the air-fuel ratio sensor provided downstream from the exhaust gas control catalyst.

Further, in the reducing agent supply error detecting apparatus, the internal combustion engine may be a diesel engine, and the exhaust gas control catalyst may be a catalyst for example, a NOx storage reduction catalyst. Particularly, the diesel engine is normally operated at an air-fuel ratio higher than the stoichiometric air-fuel ratio. Therefore, after the NOx storage reduction control catalyst stores NOx, the storage ability of the NOx storage reduction control catalyst is recovered by supplying the reducing agent. By applying the invention to such a diesel engine, a supply error can be detected with high accuracy, and therefore a determination concerning an abnormality can be made accurately.

BRIEF DESCRIPTION OF THE DRAWINGS

FIG. 1 is a block diagram schematically showing a structure of a diesel engine and a control device for a vehicle, according to a first embodiment of the invention;
FIG 2 is a flowchart of a supply valve state detection performance condition determining process performed by an ECU;
FIG. 3 is a flowchart of a determination value setting process performed by the ECU;
FIGS. 4A and 4B is a flowchart of a supply valve state determining process performed by the ECU;
FIG 5 is a timing chart showing an example of control at the time of normal determination according to the first embodiment;
FIG. 6 is a timing chart showing an example of control at the time of abnormal determination according to the first embodiment;
FIG. 7 is a timing chart showing an example of control at the time of abnormal determination according to the first embodiment;
FIG. 8 is a timing chart showing an example of control at abnormal determination impossible time according to the first embodiment;
FIG. 9 is a timing chart showing an example of control at the time of normal determination according to a second embodiment of the invention;
FIG. 10 is a timing chart showing an example of control at the time of abnormal determination time according to the second embodiment;
FIG 11 is a timing chart showing an example of control at the time of abnormal determination according to the second embodiment;
FIG. 12 is a timing chart showing an example of control at abnormal determination impossible time according to the second embodiment;
FIG 13 is a graph showing a structure of a combustion mode coefficient map used in a third embodiment of the invention;
FIG 14 is a graph showing a structure of a catalyst bed temperature coefficient map used in the third embodiment; and

FIG. 15 is a graph showing a structure of an intake air amount coefficient map used in the third embodiment.

DETAILED DESCRIPTION OF THE PREFERRED EMBODIMENTS

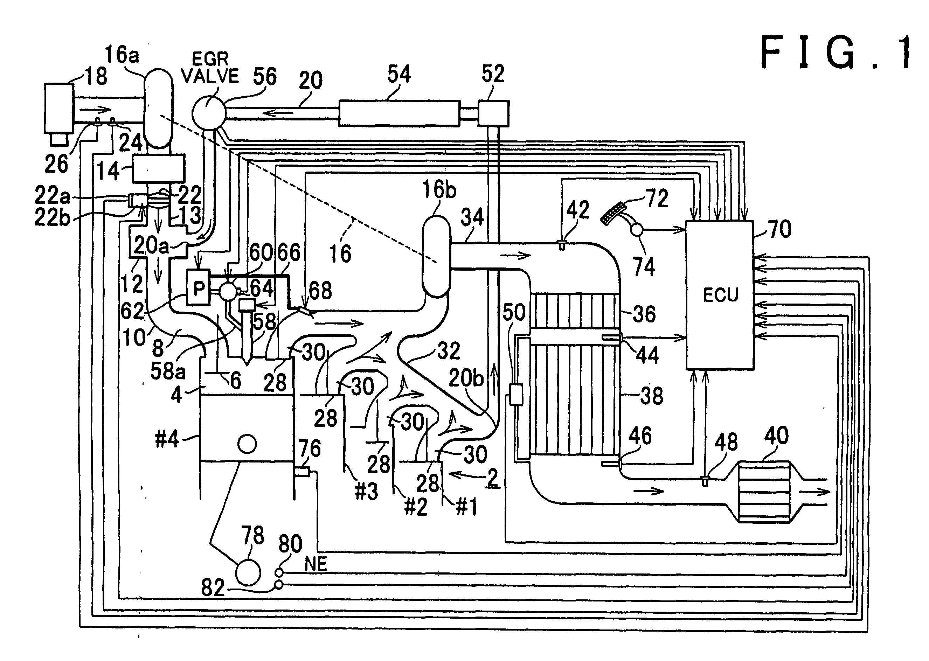

Hereafter, a first embodiment of the invention will be described with reference to accompanying drawings. FIG. 1 is a block diagram schematically showing a structure of a diesel engine and a control device for a vehicle to which the invention is applied. Note that the invention can be applied to an engine having a NOx storage reduction catalyst, for example, a lean burn gasoline engine.

A diesel engine 2 includes a plurality of cylinders. In the embodiment, the diesel engine 2 includes four cylinders, #1, #2, #3 and #4. A combustion chamber 4 of each of the cylinders #1, #2, #3 and #4 is coupled to a surge tankl2 via an intake port opened/closed by an intake valve 6, and an intake manifold 10. The surge tankl2 then coupled to an intercooler 14 and an outlet side of a compressor 16a of a supercharger, that is, an exhaust turbocharger 16 in the embodiment. An inlet side of the compressor 16a is coupled to an air cleaner 18. An EGR gas supply port 20a of an exhaust gas re-circulation (hereinafter, referred to as "EGR") passage 20 opens into the surge tank12. A throttle valve 22 is provided in an intake passage 13 connecting the surge tankl2 to the intercooler 14. An intake air amount sensor 24 and an intake air temperature sensor 26 are provided between the compressor 16a and the air cleaner 18.

The combustion chamber 4 of each of the cylinders #1, #2, #3 and #4 is coupled to an inlet side of an exhaust turbine 16b of the exhaust turbocharger 16 via an exhaust port 30 opened/closed by an exhaust valve 28, and an exhaust manifold 32. An outlet side of the exhaust turbine 16b is connected to an exhaust passage 34. The exhaust turbine 16b takes in exhaust gas from the fourth cylinder #4 side in the exhaust manifold 32.

In the exhaust passage 34, there are provided three catalytic converters 36, 38, and 40 each of which has an exhaust gas control catalyst. In the first catalytic converter 36 provided uppermost stream among the three catalytic converters, a NOx storage reduction catalyst is housed. When exhaust gas is in the oxidizing atmosphere (i.e., when the air-fuel ratio is lean) while the diesel engine is operating normally, NOx is stored in the NOx storage reduction catalyst. When exhaust gas is in the reducing atmosphere (i.e., when the air-fuel ratio is stoichiometric or rich), the NOx stored in the NOx storage reduction catalyst is released as NO, and reduced by HC and CO. NOx is thus purified.

In the second catalytic converter 38 provided between the other converters 36 and 40, a filter having a wall portion formed in a monolithic structure is stored. The wall portion is configured such that exhaust gas flows through micropores formed in the wall portion. Since the surface of the filter is coated with the NOx storage reduction catalyst, NOx is purified as described above. In addition, PM in exhaust gas is captured on the surface of the filter. Therefore, oxidation of PM is started by active oxygen which is generated when NOx is stored in the oxidizing atmosphere. Further, the entire PM is oxidized by ambient excessive oxygen. In the reducing atmosphere (i.e., when the air-fuel ratio is stoichiometric or rich), oxidization of PM is promoted by a large amount of active oxygen generated from the NOx storage reduction catalyst. Thus, not only NOx but also PM is purified.

In the third catalytic converter 40 provided lowermost stream among the three catalytic converters, an oxidation catalyst is housed, and HC and CO are oxidized and purified therein. A first air-fuel ratio sensor 42 is provided upstream from the first catalytic converter 36. A first exhaust temperature sensor 44 is provided between the first catalytic converter 36 and the second catalytic converter 38. Between the second catalytic converter 38 and the third catalytic converter 40, a second exhaust temperature sensor 46 is provided near the second catalytic converter 38, and a second air-fuel ratio sensor 48 is provided near the third catalytic converter 40.

Each of the first air-fuel ratio sensor 42 and the second air-fuel ratio sensor 48 detects an air-fuel ratio in exhaust gas based on components of the exhaust gas at a position thereof, and outputs a voltage signal proportional to the air-fuel ratio linearly. Each of the first exhaust temperature sensor 44 and the second exhaust temperature sensor 46 detects a temperature of exhaust gas at a position thereof.

A pipe of a pressure difference sensor 50 is provided on each of the upstream side and the downstream side of the second catalytic converter 38. The pressure difference sensor 50 detects a pressure difference between the upstream side and the downstream side of the second catalytic converter 38, in order to detect clogging inside the second catalytic converter 38.

An EGR gas inlet 20b of the EGR passage 20 opens into the exhaust manifold 32. The EGR gas inlet 20b opens on the first cylinder #1 side, which is opposite to the fourth cylinder #4 side on which the exhaust turbine 16b takes in exhaust gas.

In the EGR passage 20, an iron EGR catalyst 52 for reforming the EGR gas is provided on the EGR gas inlet 20b side. Further, an EGR cooler 54 for cooling the EGR gas is provided downstream from the iron EGR catalyst 52 in the EGR passage 20. The EGR catalyst 52 also has a function of preventing clogging in the EGR cooler 54. An EGR valve 56 is provided on the EGR gas supply port 20a. The amount of EGR gas supplied from the EGR gas supply port 20a to the intake side can be adjusted by adjusting the opening amount of EGR valve 56.

A fuel injection valve 58, which is provided in each of the cylinders #1 to #4 and which directly injects fuel into the combustion chamber 4, is coupled to a common rail 60 via a fuel supply pipe 58a. Fuel is supplied from a electrically controlled discharge amount variable fuel pump 62 into the common rail 60, and high pressure fuel supplied from the fuel pump 62 into the common rail 60 is distributed to each fuel injection valve 58 via each fuel supply pipe 58a. A fuel pressure sensor 64 for detecting a fuel pressure is attached to the common rail 60.

Further, low pressure fuel is supplied to a supply valve 68 via a fuel supply pipe 66 from the fuel pump 62. The supply valve 68 is provided in the exhaust port 30 of the fourth cylinder #4, and injects fuel as a reducing agent to the exhaust turbine 16b side. Due to the injection of reducing agent, the NOx stored in the first catalytic converter 36 and the second catalytic converter is reduced and purified 38 by temporarily making the atmosphere of exhaust gas the reducing atmosphere. In addition, in the second catalytic converter 38, purification of PM is performed simultaneously with reduction and purification of NOx.

An electronic control unit (hereinafter, referred to as an "ECU") 70 mainly includes a digital computer provided with a CPU, ROM, RAM and the like, and a drive circuit for driving devices. The ECU 70 reads signals from the intake air amount sensor 24, the intake air temperature sensor 26, the first air-fuel ratio sensor 42, the first exhaust temperature sensor 44, the second exhaust temperature sensor 46, the second air-fuel ratio sensor 48, the pressure difference sensor 50, the fuel pressure sensor 64 and a throttle valve opening amount sensor 22a. In addition, the ECU 70 reads signals from an accelerator pedal operation amount sensor 74 for detecting an operation amount of an accelerator pedal 72, and a coolant temperature sensor 76 for detecting a temperature of a coolant for the diesel engine 2. In addition, the ECU reads signals from an engine rotational speed sensor 80 for detecting a rotational speed of a crankshaft 78, and a cylinder identifying sensor 82 for identifying a cylinder by detecting a rotational phase of the crankshaft 78 or a rotational phase of an inlet cam.

Based on the engine operation state obtained according to these signals, the ECU 70 performs control of the fuel injection timing and fuel injection amount using the fuel injection valve 58, and further performs control of the opening amount of EGR valve 56 and control of throttle valve opening amount using a motor 22b. For example, EGR control is performed for adjusting a throttle valve opening amount TA detected according to a signal from the throttle valve opening amount sensor 22a and the EGR valve opening amount (the opening amount of EGR valve 56), such that an EGR rate becomes equal to a target EGR rate which is set based on an engine load (or a fuel injection amount) and an engine rotational speed NE. Further, intake air amount feedback control is performed for adjusting the EGR valve opening amount such that an intake air amount becomes equal to a target intake air amount which is set based on the engine load (or the fuel injection amount) and the engine rotational speed NE (the target value for one rotation of the engine 2). As a combustion mode for the EGR control, two types of combustion mode, that are, a normal combustion mode and a low temperature combustion mode are performed. In the low temperature combustion mode, an increase in the combustion temperature is slowed by introducing a large amount of EGR gas, and the amounts of both NOx and smoke are thereby reduced. In the embodiment, the low temperature combustion mode is performed at low load in the medium and high rotational speed region. Combustion mode other than the low temperature combustion mode is the normal combustion mode in which normal EGR control (including a case where exhaust gas re-circulation is not performed) is performed.

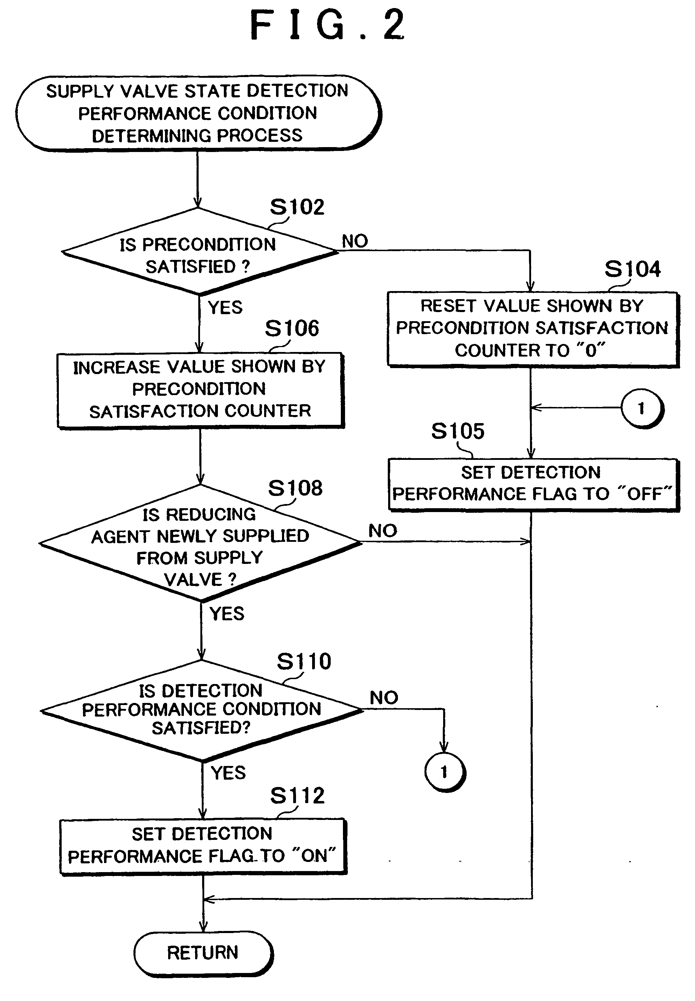

Next, the process of determination as to whether the supply valve is operating normally or abnormally, which is performed by the ECU 70, will be described in detail. FIGS. 2, 3, and 4 are flowcharts for this process. The process is performed at predetermined intervals as an interrupt process.

First, a supply valve state detection performance condition determining process (FIG. 2) will be described. When the process is started, it is initially determined in step S102 whether a precondition is satisfied. The precondition includes the following conditions.

(1) The operation state of the engine 2 is stable. This shows that the air-fuel ratio is stabilized in the present operation state. In the embodiment, when a change amount Δga in an intake air amount ga detected by the intake air amount sensor 24 per unit time is equal to or smaller than a reference value, and also a change amount Δqf in an amount qfin of fuel for combustion injected from the fuel injection valve 58 at each injection is equal to or smaller than a reference value, it is determined that the air-fuel ratio is stabilized in the present operation state.

(2) The catalyst control of the catalysts in the catalytic converters 36 and 38 is in the NOx reducing mode. Namely, in the present operation state, the reducing agent should be supplied from the supply valve 68. (3) In the present combustion mode, an air-fuel ratio change can be detected. Examples of this combustion mode are the above-mentioned normal combustion mode and the low temperature combustion mode.

(4) The second air-fuel ratio sensor 48 is operating properly. (5) The intake air amount sensor 24 is operating properly. (6) The second air-fuel ratio sensor 48 has been activated.

(7) The amount of fuel which adheres in the exhaust manifold 32 is equal to or smaller than a reference value. The amount of fuel which adheres in the exhaust manifold 32 is periodically calculated by an adhering fuel amount calculating process performed by the ECU 70 separately. If the amount of adhering fuel is large, the accuracy of calculation of the estimated supply amount and the like is decreased. The calculation of the estimated supply amount is performed based on the value detected by the second air-fuel ratio sensor 48, as will be described later.

(8) Deactivation of the NOx storage reduction catalysts in the catalytic converters 36 and 38 due to a decrease in the catalyst bed temperature and a decrease in the temperature of the exhaust gas flowing therein has not occurred. (9) The present moment is before the lapse of the air-fuel ratio change detecting period which is set for the present supply. The air-fuel ratio change detecting period will be described later in detail.

When all the conditions (1) to (9) are satisfied, the precondition is regarded as being satisfied. Therefore, if even one of the conditions (1) to (9) is not satisfied ("NO" in step S102), the value shown by a precondition satisfaction counter, which counts a duration of the period in which the precondition is satisfied, is reset to "0" in step S104. Then, a detection performance flag for determining whether supply valve state detection is performed is set to "OFF" in step S105, afterwhich the process ends. When the precondition is not satisfied ("NO" in step S102), steps S104 and S105 are repeatedly performed.

The case where the precondition is satisfied ("YES" in step S102) will be described. First, the value shown by the precondition satisfaction counter is increased in step S106. For example, by incrementing the counter, the time is counted using the control cycle of the process as a unit.

Next, it is determined in step S108 whether the reducing agent is newly supplied from the supply valve 68, which is presently subjected to the detection. When it is determined that the reducing agent is not newly supplied from the supply valve 68 ("NO" in step S108), whether the supply valve 68 is operating normally or abnormally cannot be detected based on the output from the second air-fuel ratio sensor 48. Therefore, the process ends.

When it is determined that the reducing agent is newly supplied from the supply valve 68 ("YES" in step S108), it is then determined in step S110 whether the detection performance condition is satisfied. The detection performance condition includes the following conditions.

1) The value shown by the precondition satisfaction counter is equal to or higher than a reference value. (2) A reference time has elapsed since the previous supply of the reducing agent from the supply valve 68. Alternatively, the intake air amount, which has been accumulated since the previous supply of the reducing agent, is equal to or larger than a reference amount.

(3) The reducing agent supplied from the supply valve 68 is used for reducing NOx in the NOx storage reduction catalysts in the catalytic converters 36 and 38. (4) The detection performance flag is "OFF".

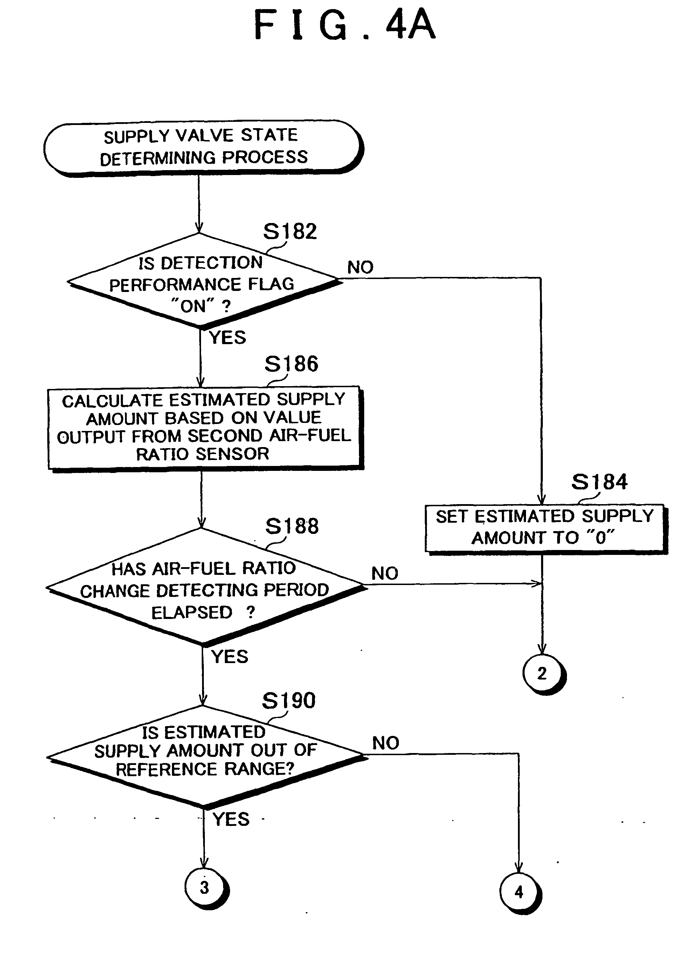

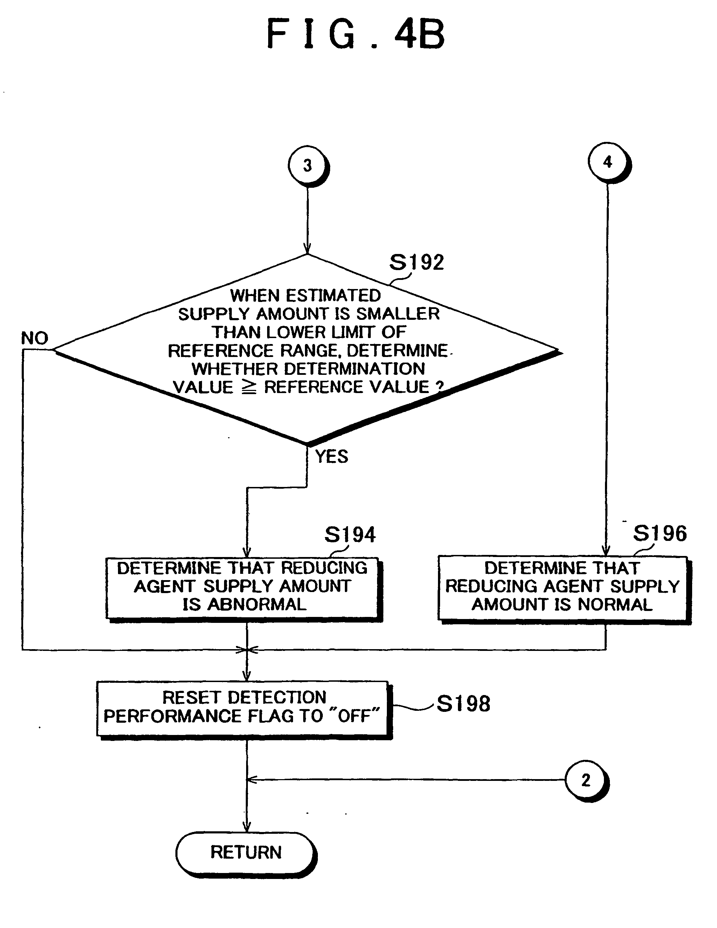

When all the conditions (1) to (4) are satisfied, the detection performance condition is satisfied. Therefore, when even one of the conditions (1) to (4) is not satisfied ("NO" in step S110), the detection performance flag is set to "OFF" in step S105, afterwhich the process ends. The detection performance flag is set to "OFF" in step S105. Accordingly, even when the detection performance flag is already "ON", the detection performance flag is reset to "OFF". Thus, even when the determination by the supply valve state determining process (FIGS. 4A and 4B), which will be described later, is being performed based on the previous reducing agent supply, by newly supplying the reducing agent, the determination by the supply valve state determining process (FIGS. 4A and 4B) is immediately stopped.

When it is determined that the detection performance condition is satisfied ("YES" in step S 110), the detection performance flag is set to "ON" in step S112, afterwhich the process ends. If the precondition continues to be satisfied in the next control cycle ("YES" in step S102), the value shown by the precondition satisfaction counter is increased in step S106, and the counter value of the precondition satisfaction counter is increased. When the reducing agent supply continues, the reducing agent is not newly supplied ("NO" in step S108). Therefore, the process ends, and the detection performance flag is kept "ON".

When it is determined that the precondition is not satisfied ("NO" in step S 102), the steps S104 and S105 are performed, the value shown by the precondition satisfaction counter is reset to "0", and the detection performance flag is reset to "OFF".

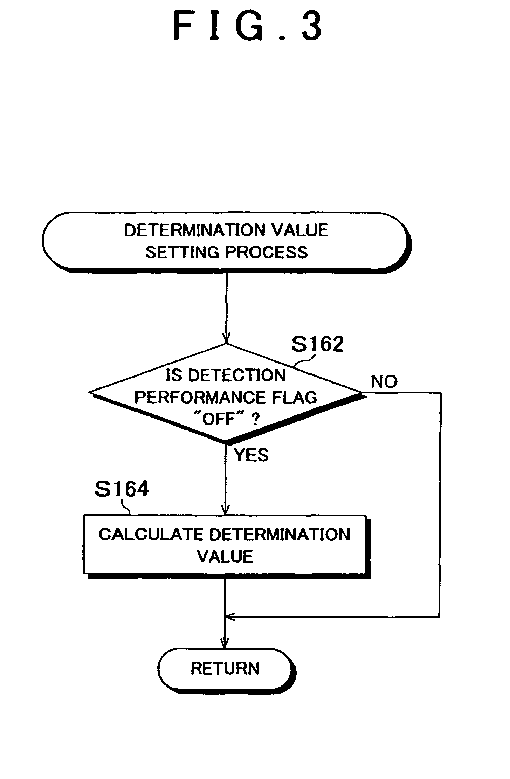

Next, a determination value setting process (FIG. 3) will be described. When the process is started, it is initially determined in step S162 whether the detection performance flag is "OFF". When it is determined that the detection performance flag is "OFF" ("YES" in step S162), a determination value Qadj (g) is calculated according to the following equation "1" in step S164.

$$Qadj \leftarrow Qadf - D(afx) \qquad \text{[Equation 1]}$$

Here, an instructed supply amount Qadf is a supply amount (g) which is calculated by the ECU 70 such that the instructed amount Qadf (g) of reducing agent is supplied from the supply valve 68. The instructed supply amount Qadf is calculated according to the following equation "2".

$$Qadf \leftarrow Qadt \times Nad \times \text{fuel gravity}/ 1000 \qquad \text{[Equation 2]}$$

Here, a supply amount Qadt shows a cubic volume ($cm^3$) of the fuel which is supplied, as the reducing agent, into exhaust gas each time the supply valve 68 opens. Valve opening times Nad shows the number of times that the supply valve 68 opens consecutively in one time of reducing agent supply. For example, the valve opening times Nad is "2" in the low temperature combustion mode, and is "4" in the normal combustion mode. According to the equation "2", the amount (g) of reducing agent is obtained which is supplied into exhaust gas in one time of reducing agent supply process, if the supply valve 68 is operating properly.

An elimination region supply amount D (afx) shows a supply amount for eliminating a region in the air-fuel ratio change caused by the reducing agent supply, in which accuracy of detection performed by the second air-fuel ratio sensor 48 is relatively low. The elimination region supply amount D (afx) is calculated according to the following equation "3".

$$D(afx) \leftarrow [(1/afx) - (1/afbase)] \times ga \times Qadtt \qquad \text{[Equation 3]}$$

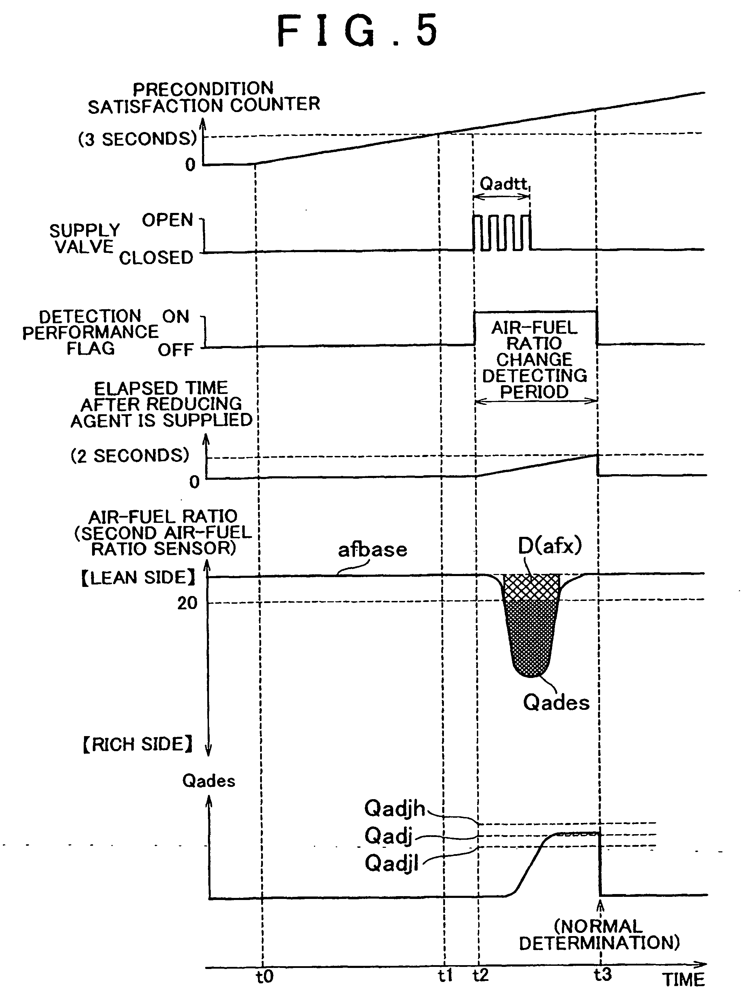

A base air-fuel ratio afbase is an air-fuel ratio which is generated by fuel injected from the fuel injection valve 58 into each combustion chamber 4 before starting the supply of reducing agent. The upper limit air-fuel ratio afx for determination is the upper limit for the accuracy of air-fuel ratio detection. For example, the upper limit air-fuel ratio afx is set to "20". A continuous supply time Qadtt shows the time in which the air-fuel ratio becomes lower than the upper limit air-fuel ratio afx due to reducing agent supply from the supply valve 68. The continuous supply time Qadtt is a value proportional to the total length of time in which the reducing agent of the supply mount Qadt is supplied Nad times. The continuous supply time Qadtt can be obtained, for example, by obtaining the product of the total supply time, in which the reducing agent of the supply amount of Qadt is supplied Nad times, and a predetermined coefficient (a coefficient set by experiment). Alternatively, as shown in a timing chart in FIG. 5, the time, from the start of the first valve opening to the end of the last valve opening in the series of openings of the supply valve 68, the openings being performed two times or four times consecutively, may be used as it is, or the product of the time from the start of the first valve opening to the end of the last valve opening, and a predetermined coefficient (a coefficient set by experiment) may be used.

The determination value Qadj is thus calculated, afterwhich the process ends. After this, as long as the detection performance flag is "OFF" ("YES" in step S162), the determination value Qadj is repeatedly calculated and updated in step S164.

When the detection performance flag is set to "ON" in step S 112 in the supply valve state detection performance condition determining process (FIG. 2), a negative determination is made in step S162 in the determination value setting process (FIG.3), and update of the determination value Qadj is stopped. Therefore, the newest determination value Qadj, which is used immediately before the detection performance flag is set to "ON", is maintained, and is used in a supply valve state determining process (FIGS. 4A and 4B), which will be described next.

The supply valve state determining process (FIGS. 4A and 4B) will be described in detail. When the process is started, it is initially determined in step S 182 whether the detection performance flag is "ON". When it is determined that the detection performance flag is "OFF" ("NO" in step S182), the estimated supply amount is set to "0"(g) in step S 184, afterwhich the process ends.

When it is determined in step S112 in the supply valve state detection performance condition determining process (FIG. 2) that the detection performance flag is "ON" ("YES" in step S 182), an estimated supply amount Qades (g) is calculated based on the value output from the second air-fuel ratio sensor 48 according to the following equation "4" in step S 186.

$$Qades \leftarrow Qadeso + [(1/afa) - (1/afx)] \times ga \times \text{control cycle} \qquad \text{[Equation 4]}$$

A previous estimated supply amount Qadeso on the right-hand side of the equation "4" is set to an estimated supply amount Qades which is calculated according to the equation "4" in the control cycle performed immediately before the present control cycle. The initial value of the Qadeso, which is used immediately after the detection performance flag is switched from "OFF" to "ON", is "0" (Qadeso = "0" (g)). An air-fuel ratio afa is the air-fuel ratio detected by the second air-fuel ratio sensor 48 in the present control cycle.

The portion other than the previous estimated supply amount Qadeso on the right-hand side of the equation "4" shows the supply amount which contributes achievement of an air-fuel ratio lower than the upper limit air-fuel ratio afx for determination (corresponding to the reducing agent supply amount corresponding value in claims) in the total amount of reducing agent supplied from the supply valve 68 during one control cycle. Therefore, according to the equation "4", the process is performed for calculating the reducing agent supply amount corresponding value in each control cycle and for adding the calculated reducing agent supply amount corresponding value to the estimated supply amount Qades. When the reducing agent supply amount corresponding value becomes equal to or smaller than "0", that is, when "(1/afa) ≤ (1/afx)", accumulation by the equation "4" is not performed. Also, the intake air amount ga is used as the exhaust gas flow amount corresponding value, instead of the exhaust gas flow amount.

Next, it is determined in step S188 whether the air-fuel ratio change detecting period has elapsed. The air-fuel ratio change detecting period is set to the period from when the reducing agent is supplied from the supply valve 68 until when the effect on the present air-fuel ratio afa, which is detected by the second air-fuel ratio sensor 48, disappears. For example, the air-fuel ratio change detecting period is set based on time necessary for one time supply of reducing agent from the supply valve 68, and the intake air amount ga which is used as the exhaust gas flow amount corresponding value instead of the exhaust gas flow amount.

When it is determined that the air-fuel ratio change detecting period has not elapsed ("NO" in step S 188), the process ends. When it is determined that the air-fuel ratio change detecting period has not elapsed ("NO" in step S188), the process for calculating the reducing agent supply amount corresponding value in each control cycle and for adding the calculated reducing agent supply amount corresponding value to the estimated supply amount Qades according to the equation "4" is continued.

When it is determined that the air-fuel ratio change detecting period has elapsed ("YES" in step S 188), it is determined in step S 190 whether the estimated supply amount Qades, which is obtained by accumulation during the air-fuel ratio change detecting period, is out of a reference range. The upper limit of the reference range is above the determination value Qadj, and the lower limit thereof is below the determination value Qadj. Namely, by performing step S190, a supply error (in this case, whether the estimated supply amount Qades is out of the reference range) is detected by comparing the estimated supply amount Qades with the determination value Qadj.

Here, the reference range is the range from the reference range lower limit value Qadjl to the reference rang upper limit value Qadjh. The reference range lower limit value Qadjl is set based on the determination value Qadj calculated by the determination value setting process (FIG. 3) according to the following equation "5".

$$\text{Qadjl} \leftarrow \text{Qadj} \times \text{kl} \qquad\qquad \text{[Equation 5]}$$

Here, the coefficient k is set to a value lower than "1.0". e.g., "0.9".

The reference range upper limit value Qadjh is set based on the determination value Qadj according to the equation "6".

$$\text{Qadjh} \leftarrow \text{Qadj} \times \text{kh} \qquad\qquad \text{[Equation 6]}$$

Here, a coefficient kh is set to a value higher than "1.0", e.g., "1.1".

Therefore, when "Qadjl ≤ Qades ≤ Qadjh", the estimated supply amount Qades is within the reference range. When "Qades < Qadjl" or "Qades > Qadjh", the estimated supply amount Qades is out of the reference range.

When it is determined that the estimated supply amount Qades is within the reference range ("NO" in step S190), the estimated supply amount Qades is determined to be substantially equal to the instructed supply amount which contributes to the air-fuel ratio that is lower than the upper limit air-fuel ratio afx for determination at normal time, which is shown as the determination value Qadj. Therefore, it can be determined that, as the amount of reducing agent supplied from the supply valve 68, the reducing agent, whose amount corresponds to the instructed supply amount Qadf, is always supplied normally. Accordingly, a determination that the reducing agent supply state is normal (hereinafter, referred to as a "normal determination") is made in step S196. Then, the detection performance flag is reset to "OFF" in step S198, afterwhich the process ends.

After this, the detection performance flag is "OFF". Therefore, a negative determination is made in step S 182 in the next control cycle, and the estimated supply amount Qades is set to "0". Until the detection performance flag is set to "ON" again in step S112 in the supply valve state detection performance condition determining process (FIG. 2), the state where a negative determination is made in step S 182 continues.

Next, the case where the estimated supply amount Qades is out of the reference range ("YES" in step S190) will be described in detail. When the estimated supply amount Qades is smaller than the lower limit value Qadjl of the reference range, that is, when "Qades < Qadjl", it is determined in step-S 192 whether the determination value Qadj is equal to or higher than the reference value. If it is determined whether the estimated supply amount Qades is lower/higher than the determination value Qadj when both Qades and Qadj are considerably small, the accuracy of determination decreases. Therefore, the process in step S 192 is performed in order to prohibit determination when both Qades and Qadj are considerably small. Accordingly, the reference value is set to a value at which a determination can be made with high accuracy.

When the estimated supply amount Qades is larger than the upper limit value Qadjh of the reference range (Qades > Qadjh), or when "Qades < Qadjl" and also "Qadj ≥ reference value", an affirmative determination is made in step S 192. In this state, it is determined that the estimated supply amount Qades largely deviates from the determination value Qadj, and the amount of reducing agent supplied from the supply valve 68 is abnormal. Therefore, a determination that the reducing agent supply state is abnormal (hereinafter, referred to as an "abnormal determination") is made in step S194. Then, the determination performance flag is reset to "OFF", afterwhich the process ends.

The normal determination and the abnormal determination are stored in nonvolatile memory in the ECU 70, and the determination data is maintained even after the power supply of the ECU 70 is turned OFF. A normal determination or an abnormal determination may be made after a negative determination in step S 190 or an affirmative determination in step S 192 is made predetermined number of times, e.g., two or three times, consecutively, instead of only one time.

On the other hand, when "Qades < Qadjl" and also "Qadj < reference value", a negative determination is made in step S 192. In this state, the accuracy for making an abnormal determination is insufficient. Therefore, an abnormal determination is not made, and the detection performance flag is reset to "OFF" in step S 198, afterwhich the process ends.

By performing the determination process as described above, it can be determined whether the supply valve 68 is operating normally or abnormally. When an abnormal determination is made as described above, an abnormality in the engine is notified by an alarm lamp or the like.

FIGS. 5, 6, 7 and 8 are timing charts each of which shows an example of a process according to the embodiment. In FIG. 5, from the time when the precondition is satisfied (from time t0), the value shown by the precondition satisfaction counter increases, and the value shown by the precondition satisfaction counter becomes a value equal to or higher than the reference time, three seconds in this case (from time t1). Then, the reducing agent is supplied from the supply valve 68 in order to reduce NOx in the NOx storage reduction catalyst (at time t2). Therefore, from time t2, the supply amount which contributes an air-fuel ratio equal to or lower than the upper limit air-fuel ratio afx (=20) for determination is calculated in each control cycle based on the air-fuel ratio afa detected by the second air-fuel ratio 48, and the calculated values are accumulated. The estimated supply amount Qades is thus obtained (from time t2 to time t3).

As a result, when it is determined that "Qadjl ≤ Qades ≤ Qadjh" as shown in FIG. 5, a normal determination is made (at time t3). Alternatively, the determination that "Qadjl ≤ Qades ≤ Qadjh" is made repeatedly and consecutively, and the number of repetitions reaches a reference number, the formal determination is made formally.

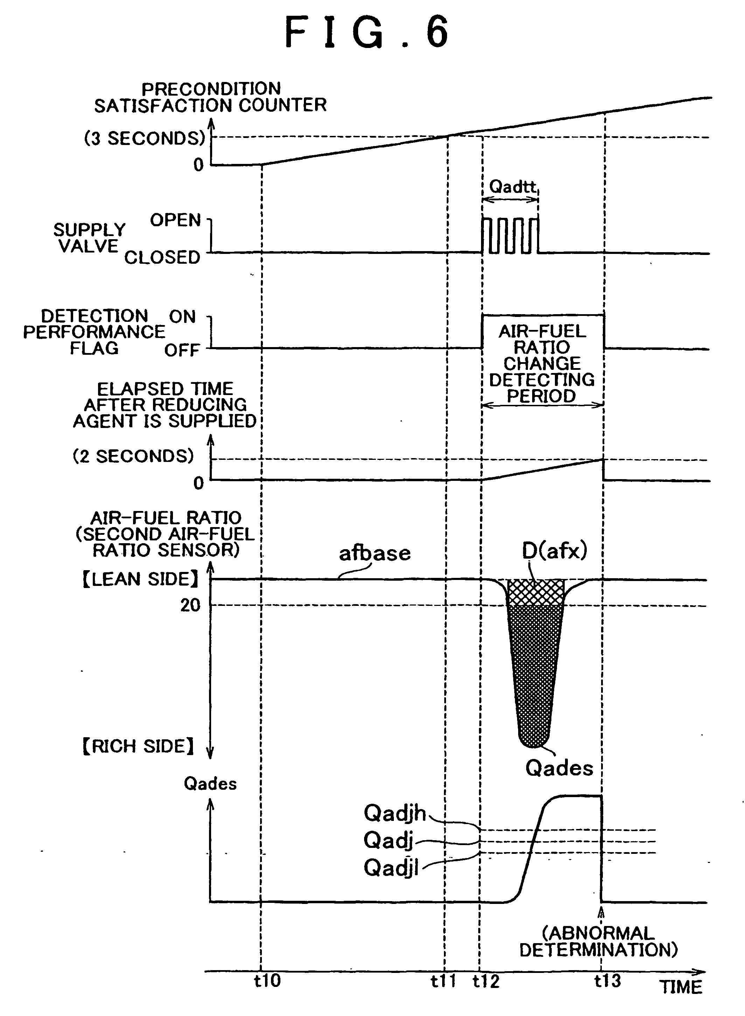

In FIG. 6, from the time when the precondition is satisfied (from time t10) and until when the reducing agent is supplied (at time t12), the state is the same as that in FIG. 5 (from time t0 to time t12). However, when the estimated supply amount Qades, which contributes an air-fuel ratio equal to or lower than the upper limit air-fuel ratio afx for determination, is obtained (from time t12 to time t13), as shown in FIG. 6, it is determined that "Qades > Qadjh". Therefore, an abnormal determination is made (at time t13). Alternatively, when the determination that "Qades > Qadjh" is made repeatedly and consecutively, and the number of repetition reaches a reference number, an abnormal determination is made formally.

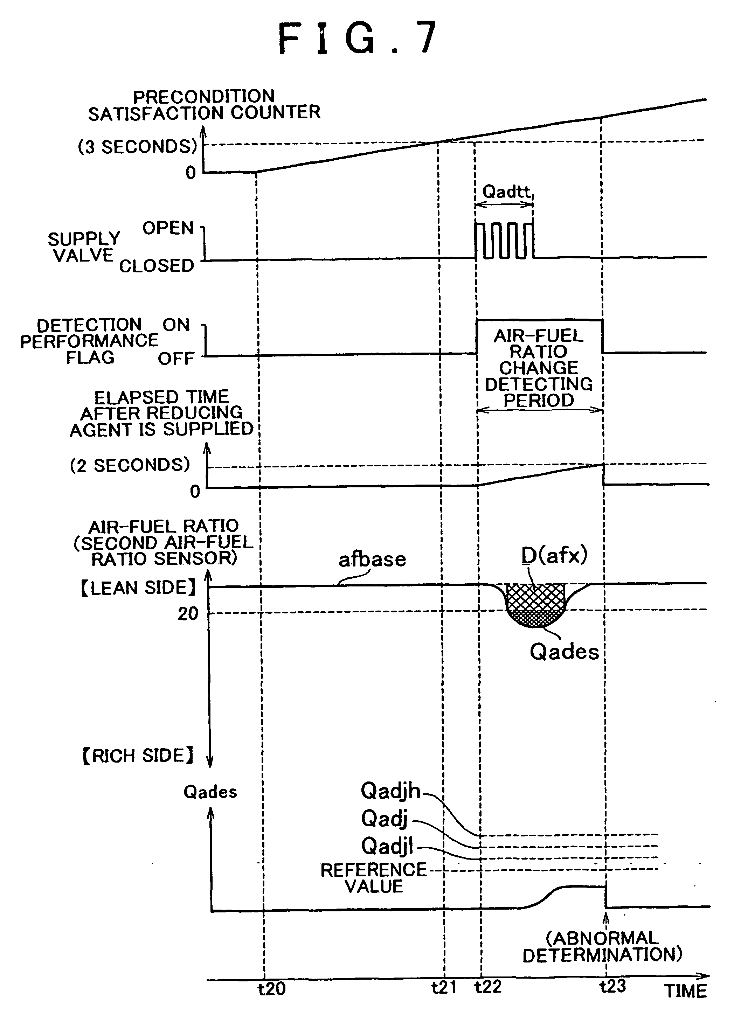

In FIG 7, from the time when the precondition is satisfied (from time t20) until when the reducing agent is supplied (at time t22), the state is the same as that in FIG 5 (from time t0 to time t2). However, when the estimated supply amount Qades which contributes an air-fuel ratio equal to or lower than the upper limit air-fuel ratio afx for determination is obtained (from time t22 to time t23), as shown in FIG. 7, it is determined that "Qades > Qadjl". In this case, since "Qadj ≥ reference value", an abnormal determination is made (at time t23). Alternatively, when the determination that "Qades < Qadjl" and "determination value Qadj ≥ reference value" is made repeatedly and consecutively, and the number of repetition reaches a reference number, an abnormal determination is made formally.

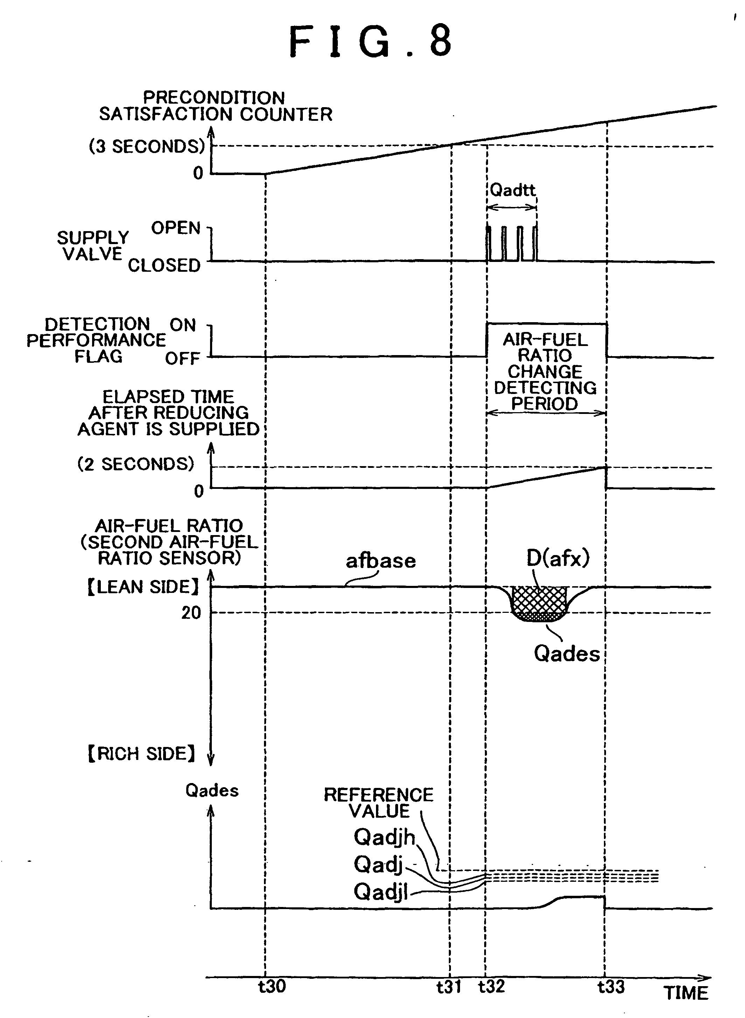

In FIG 8, from the time when the precondition is satisfied (from time t30) until when the reducing agent is supplied (at time t32), the state is the same as that in FIG 5 (from time t0 to time t2). When the estimated supply amount Qades which contributes an air-fuel ratio equal to or lower than the upper limit air-fuel ratio afx for determination is obtained (from time t32 to time t33), as shown in FIG. 8, it is determined that "Qades < Qadjl". However, since the determination value Qadj < reference value, an abnormal determination is not made in consideration of the accuracy of determination (at time t33).

The relationship between the above-mentioned structure and claims will be described. The mechanism, which includes the fuel pipe 66 and the supply valve 68, and which reduces NOx in the NOx storage reduction catalysts in the catalytic converters 36 and 38 by control performed by the ECU 70, corresponds to a reducing agent supply mechanism. The series of processes in FIGS. 2, 3, and 4 performed by the ECU 70 using the value detected by the second air-fuel ratio sensor 48 corresponds to a reducing agent supply error detecting method for an exhaust gas control catalyst, and further corresponds to a process performed by the reducing agent supply error detecting apparatus.

In the series of processes in FIGS. 2, 3 and 4, step S 188 corresponds to the process as air-fuel ratio change detecting period setting means, step S 186 corresponds to a process as reducing agent estimated supply amount calculating means, step S190 corresponds to a process as error detecting means, and steps S 192 and S 194 correspond to a process as abnormality determining means.

According to the first embodiment which has been described so far, the following effects can be obtained. (1) When the reducing agent is supplied from the supply valve 68 into the exhaust port 30, the air-fuel ratio detected by the second air-fuel ratio 48 becomes lower than the air-fuel ratio generated by the fuel injected from the fuel injection valve 58 to the combustion chamber 4. In the embodiment, the estimated supply amount Qades is obtained by periodically accumulating the reducing agent supply amount corresponding value which appears in the air-fuel ratio change, according to the equation "4", instead of using the maximum value of the air-fuel ratio decrease. It is therefore possible to obtain the estimated supply amount Qades with high accuracy.

Then, by determining whether the estimated supply amount Qades is within or out of the reference range "from Qadjl to Qadjh" set based on the determination value Qadj, the estimated supply amount Qades is compared with the determination value Qadj. It is therefore possible to detect the supply error with high accuracy. As a result, an abnormal determination in step S194 and a normal determination in step S196 can be made accurately.

(2) Particularly in the embodiment, when the estimated supply amount Qades is compared with the determination value Qadj, the region, where the air-fuel ratio is from the air-fuel ratio generated due to the combustion to "20", is excluded. The estimated supply amount in the region is likely to fluctuate due to causes other than the actual supply amount of reducing agent. Accordingly, by performing comparison while excluding the above-mentioned region, a supply error can be detected with higher accuracy. As a result, it is possible to make an abnormal determination and a normal determination more accurately.

(3) In order to obtain the estimate supply amount Qades with high accuracy based on the change in the exhaust gas flow amount, the intake air amount ga which is substantially proportional to the exhaust gas flow amount is used. Accordingly, the exhaust gas flow amount corresponding value can be obtained easily compared with the case where the flow amount of high-temperature exhaust gas is directly detected. As a result, the estimated supply amount Qades can be obtained with high accuracy.

(4) When the amount of reducing agent supplied from the supply valve 68 is small, the accuracy of detection performed by the second air-fuel ratio sensor 48 tends to decrease. In the embodiment, the reference value for determining the level at which the accuracy of detection decreases is set for the determination value Qadj, and it is determined in step S 192 whether the determination value Qadj is equal to or higher than the reference value. When it is determined that "Qadj ≥ reference value" ("YES" in step S 192), since a determination concerning a supply error can be made with high accuracy, an abnormal determination is made in step S 194. On the other hand, when it is determined that "Qadj < reference value" ("NO" in step S 192), an abnormal determination is not made. Thus, an abnormal determination can be prevented from being inaccurate.

(5) If the reducing agent is newly supplied from the supply valve 68 while the supply valve state determining process (FIGS. 4A and 4B) is being performed, an affirmative determination is made in step S108, a negative determination is made in step S110, and the detection performance flag is reset to "OFF" in step S105. The supply valve state determining process (FIGS. 4A and 4B) is substantially prohibited. Therefore, it is possible to prevent the effect of the newly supplied reducing agent from being reflected on the value detected by the second air-fuel ratio sensor 48. As a result, the accuracy of detecting a supply error from decreasing due to the inaccurate estimated supply amount Qades, and a determination from being inaccurate.

(6) As one of the conditions included in the precondition which is subjected to the determination in step S102 in the supply valve state detection performance condition determining process (FIG. 2), whether the operation state of the engine 2 is stable is determined by determining whether each of the change amount Δga in the intake air amount ga and the change amount Δgfin in the amount of fuel injected by the fuel injection valve 58 at each injection is equal to or lower than each reference value. When it is determined that one of the change amount Δga and the change amount Δgfin exceeds the reference value ("NO" in step S 102), the air-fuel ratio is regarded as being unstable, and therefore the detection performance flag is set of "OFF" in step S105. Thus, the supply valve state determining process (FIGS. 4A and 4B) can be substantially prohibited. As a result, the accuracy of detecting a supply error can be prevented from decreasing, and a determination can be prevented from being inaccurate.

(7) One of the conditions included in the detection performance condition which is subjected to the determination in step S110 of the supply valve state detection performance condition determining process (FIG. 2), it is determined whether time equal to or longer than the reference time has elapsed since the reducing agent is supplied from the supply valve 68 previously (alternatively, whether the intake air amount, which has been accumulated since the reducing agent is supplied from the supply valve 68 previously, is equal to or larger than the reference value). Even if a supply instruction is newly made while the effect of the reducing agent supply according to the previous supply instruction remains on the air-fuel ratio, whether the reducing agent supply is according to the present supply instruction or the previous supply instruction cannot be determined based on the value detected by the air-fuel ratio sensor. Accordingly the accurate estimated supply amount Qades cannot be obtained. Therefore, the period in which the effect of the previous supply of the reducing agent remains on the air-fuel ratio is determined whether time equal to or longer than the reference time has elapsed since the previous supply, in consideration of evaporation of adhering fuel and the exhaust gas flow amount in the exhaust system. Alternatively, a determination is made based on whether the amount of intake air which has been accumulated since the previous supply becomes equal to or larger than the reference amount.

When it is determined that the reference period has not elapsed, or the accumulated intake air amount is equal to or larger than the reference amount ("NO" in step S110), the detection performance flag is set to "OFF" in step S105, thereby substantially prohibiting the supply valve state determining process (FIGS. 4A and 4B). As a result, the accuracy of detecting a supply error can be prevented from decreasing, and a determination can be prevented from being inaccurate.

(8) In the embodiment, as the sensor which detects the air-fuel ratio data used for calculation of the estimated supply amount Qades, the second air-fuel ratio sensor 48 provided downstream from the second catalytic converter 38 is used. Since the second air-fuel ratio sensor 48 is exposed to the purified exhaust gas, it becomes difficult for the second air-fuel ratio sensor 48 to be affected by PM and NOx in exhaust gas. As a result, more accurate detection can be performed. Particularly, in the case where the estimated supply amount Qades of the reducing agent is obtained based on the difference between the air-fuel ratios, as in the embodiment, the effect of the detection accuracy is large. Accordingly, by using the data detected by the second air-fuel ratio sensor 48 provided downstream from the second catalytic converter 38, a supply error can be detected more accurately. As a result, a normal determination and an abnormal determination can be made accurately.

Hereafter, a second embodiment of the invention will be described. In the first embodiment, it is determined whether the supply valve 68 is operating normally or abnormally using the estimated supply amount Qades which contributes an air-fuel ratio in the region lower than "20". Unlike this, in the embodiment, it is determined whether the supply valve 68 is operating normally or abnormally by calculating the entire supply amount which causes a decrease from the air-fuel ratio due to the amount of fuel injected by the fuel injection valve 58, as the estimated supply amount Qades. Therefore, calculating processes and values used for determination in the determining value setting process (FIG. 3) and the supply valve state determining process (FIGS. 4A and 4B) are different from those in the first embodiment. The flow of the process is the same as that in the first embodiment. Therefore, the process in the embodiment will be described using the flowcharts in FIGS. 2 to 4.

The determination value setting process in the embodiment will be described with reference to FIG. 3. When the process is started, it is initially determined in step S162 whether the determination performance flag is "OFF". When it is determined that the detection performance flag is "OFF" ("YES" in step S162), the determination value Qadj (g) is calculated according to the following equation "7" in step S164.

$$Qadj \leftarrow Qadf \qquad \text{[Equation 7]}$$

Here, the instructed supply amount Qadf is the supply amount (g) calculated by the ECU70 such that the calculated amount of reducing agent is supplied from the supply valve 68, and is calculated according to the equation "2" in the first embodiment. The determination value Qadj is set to the instructed supply amount Qadf itself, afterwhich the process ends. After this, as long as the detection performance flag is "OFF" ("YES" in step S162), the determination value Qadj is set to the instructed supply amount which is repeatedly calculated according to the equation "2", and is updated in step S164.

When the detection performance flag is set to "ON" in step S 112 in the supply valve state detection performance condition determining process (FIG. 2), a negative determination is made in step S 162 in the determination value setting process (FIG 3), and update of the determination value Qadj is stopped. Accordingly the value of the newest determination value Qadj immediately before the determination performance flag is set to "ON" is maintained, and is used in the supply valve state determining process (FIGS. 4A and 4B).

The supply valve state determining process (FIGS. 4A and 4B) will be described in detail. When the process is started, it is initially determined in step S 182 whether the detection performance flag is "ON". When it is determined that the detection performance flag is "OFF" ("NO" in step S182), the estimated supply amount is set to "0"(g) in step S 184, afterwhich the process ends.

When the detection performance flag is set to "ON" in step S 112 in the supply valve state detection performance condition determining process (FIG2) ("YES" in step S182), the estimated supply amount Qades (g) is then calculated based on the value output from the second air-fuel ratio sensor 48 according to the following equation "8" in step S186.

$$Qades \leftarrow Qadeso + [(1/afa) - (1/afbase)] \times ga \times \text{control cycle} \qquad \text{[Equation 8]}$$

The previous estimated supply amount Qadeso, the air-fuel ratio afa and the intake air amount ga on the right-hand side of the equation "8" are as described in the equation "4" in the first embodiment.

On the right-hand side of the equation "8", the portion other than the previous estimated supply amount Qadeso shows the amount of reducing agent supplied from the supply valve 68, which contributes to decrease the air-fuel ratio from the base air-fuel ratio afbase in one control cycle (corresponding to a reducing agent supply amount corresponding value in claims). Therefore, according to the equation "8", the process for accumulating the reducing agent supply amount corresponding value at each control cycle, and for setting the accumulated reducing agent supply amount corresponding value to the estimated supply amount Qades.

Next, it is determined in step S 188 whether the air-fuel ratio change detecting period has elapsed. The air-fuel ratio change detecting period is as described in the first embodiment. When it is determined that the air-fuel ratio change detecting period has not elapsed ("NO" in step S188), the process ends. When the air-fuel ratio change detecting period has not elapsed ("NO" in step S188), the process for adding the reducing agent supply amount corresponding value to the estimated supply amount Qades at each control cycle according to the equation "8".

When it is determined that the air-fuel ratio change detecting period has elapsed ("YES" in step S188), it is then determined in step S190 whether the estimated supply amount Qades, which is obtained by accumulation during the air-fuel ratio change detecting period, is out of the reference range. The upper limit of the reference range is set above the determination value Qadej, and the lower limit thereof is set below the reference range. The reference range is a range from the reference range lower limit value Qadjl to the reference range upper limit value Qadjh. The reference range lower limit value Qadjl is set based on the determination value Qadj calculated by the determination value setting process (FIG. 3) according to the following equation "9".

$$Qadjl \leftarrow Qadj \times kl2 \qquad\qquad \text{[Equation 9]}$$

Here, a coefficient kl2 may be the same value as the coefficient kl used in the equation "5" in the first embodiment, or may be another value which is lower than "1.0". For example, the coefficient kl2 is set to "0.95" in the embodiment.

The reference range upper limit value Qadjh is set based on the determination value Qadj according to the equation "10".

$$Qadjh \leftarrow Qadj \times kh2 \qquad\qquad \text{[Equation 10]}$$

Here, a coefficient kh2 may be the same value as the coefficient kh used in the equation "6" in the first embodiment, or may be another value which is higher than "1.0". For example, the coefficient kh2 is set to "1.05", in the embodiment.

When it is determined that the estimated supply amount Qades is within the reference range (Qadjl ≤ Qades ≤ Qadjh) ("NO" in step S190), the estimated supply amount Qades is determined to be substantially the same as the amount of reducing agent supplied from the supply valve 68 at the normal time, which is shown as the determination value Qadj. Therefore, the amount of reducing agent supplied from the supply valve 68 is determined to be normal. Accordingly, a normal determination (a determination that the reducing agent supply state is normal) is made in step S196. Then, the detection performance flag is reset to "OFF" in step S 198, afterwhich the process ends. After this, the detection performance flag is "OFF". Therefore, a negative determination is made in step S182 in the next control cycle, and the estimated supply amount Qades is set to "0". Until when the detection performance flag is set to "ON" again in step S 112 in the supply valve state detection performance condition determining process (FIG. 2), the state where a negative determination is made in step S 182 continues.

When the estimated supply amount Qades is out of the reference range ("Qades < Qadjl", or "Qades > Qadjh") ("YES" in step S 190), it is determined in step S 192 whether "Qades < Qadjl" and also the determination value Qadj is equal to or higher than the reference value. The determination process is performed for the same purpose as that of the first embodiment. However, as the reference value, a value higher than the reference value in the first embodiment is used.

When it is determined that the estimated supply amount Qade is larger than the reference range (Qades > Qadjh), or ("Qades < Qadjl" and also "Qadj ≥ reference value"), an affirmative determination is made in step S192. In this state, the estimated supply amount Qades is determined to be largely different from the amount of reducing agent which is supplied at normal time, that is shown as the determination value Qadj, and the amount of reducing agent supplied from the supply valve 68 is determined to be abnormal. Therefore, an abnormal determination is made in step S194. Then, the detection performance flag is reset to "OFF" in step S198, afterwhich the process ends.

On the other hand, when it is determined that "Qades < Qadjl" and also "Qadj < reference value ", a negative determination is made in step S 192. This state signifies that the accuracy for making an abnormal determination is insufficient. Accordingly, an abnormality determination is not made, and the detection performance flag is reset to "OFF" in step S 198, afterwhich the process ends.

It is therefore possible to determine whether the supply valve is operating normally or abnormally in the second embodiment. FIGS. 9, 10, 11,and 12 show timing charts each of which is an example of the process in the embodiment. In FIG. 9, from the time when the precondition is satisfied (from time t40), the value shown by the precondition satisfaction counted increases, and the value shown by the precondition satisfaction counter becomes equal to or higher than a value corresponding to a reference time (three seconds, in the embodiment) (at time t41). When the reducing agent is supplied from the supply valve 68 in order to reduce NOx (at time t42), the estimated supply amount Qades which contributes to a decrease in the base air-fuel ratio afbase is obtained by being accumulated based on the air-fuel ratio afa detected by the second air-fuel ratio sensor 48 at each control cycle (from time t42 to time t23). As a result, as shown in FIG 9, it is determined that "Qadjl ≤ Qades ≤ Qadjh", and a normal determination is made (at time t43). Alternatively, the count-up for temporary normal determination is performed, and when the count value reaches a reference value, a normal determination is made formally.

In FIG. 10, from the time when the precondition is satisfied (from time t50) until when the reducing agent is supplied (at time t52), the state is the same as that in FIG. 9 (from time t40 to time t42). However, when the estimated supply amount Qades is obtained (from time t52 to time t53), as shown in FIG. 10, it is determined that "Qades > Qadjh". Accordingly, an abnormal determination is made (at time t53). Alternatively, count-up for temporary abnormal determination is performed. When the count value reaches a reference value, an abnormal determination is made formally.

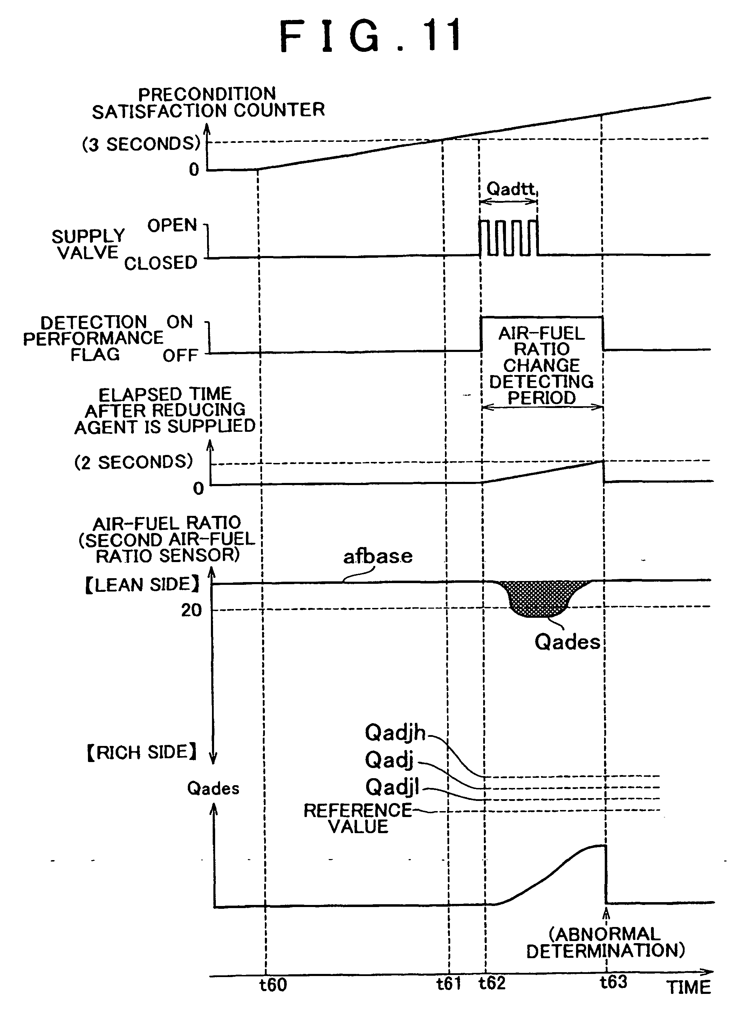

In FIG. 11, from the time when the precondition is satisfied (from time t60) until when the reducing agent is supplied (at time t62), the state is the same as that in FIG 9 (from time t40 to time t42). However, when the estimated supply amount Qades is obtained (from time t62 to time t63), as shown in FIG. 11, it is determined that "Qades < Qadjl". Since the determination value Qadj is equal to or higher than the reference value (Qadj ≥ reference value), an abnormal determination is made (at time t63). Alternatively, count-up of temporary abnormal determination is performed. When the count value reaches a reference value, an abnormal determination is made formally.

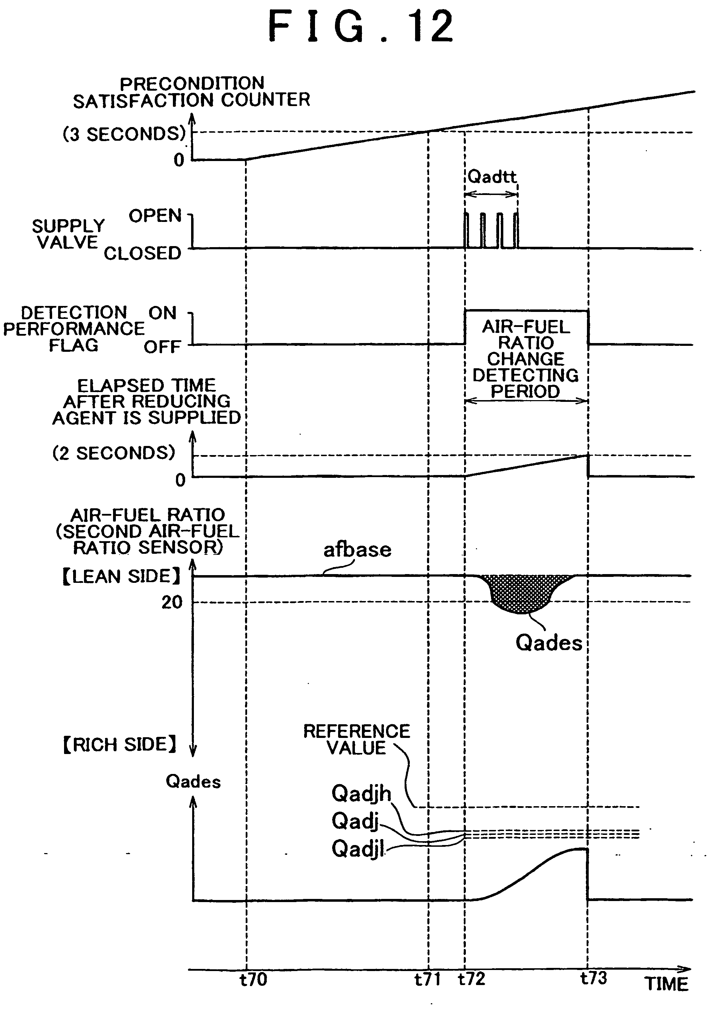

In FIG. 12, from the time when the precondition is satisfied (from time t70) until when the reducing agent is supplied (at time t72), the state is the same as that in FIG. 9 (from time t40 to time t42). However, when the estimated supply amount Qades is obtained (t72 to t73), as shown in FIG. 12, it is determined that "Qades < Qadjl". However, since the determination value Qadj is lower than the reference value (determination value Qadj < reference value), an abnormal determination is not made in consideration of the accuracy of determination (at time t73).

According to the second embodiment described so far, the same effects as the effects (1), and (3) to (8) in the first embodiment can be obtained.

Hereafter, a third embodiment of the invention will be described in detail. In the embodiment, only calculation of the determination value Qadj in step S164 in the reference value setting process (FIG 3) is different from that in the first embodiment, and the others are the same as those in the first embodiment.

In the embodiment, the determination value Qadj is calculated according to the following equation "11" in step S 164.

$$Qadj \leftarrow Kd \, [Qadf - D \, (afx)] \qquad \text{[Equation 11]}$$

Here, the instructed supply amount Qadf is calculated according to the equation "2" in the first embodiment. The elimination range supply amount D (afx) is calculated according to the equation "3" in the first embodiment.

A coefficient Kd is calculated according to the following equation "12".

$$Kd \leftarrow f1 \, (egr) \times f2 \, (thci) \times f3 \, (ga) \qquad \text{[Equation 12]}$$

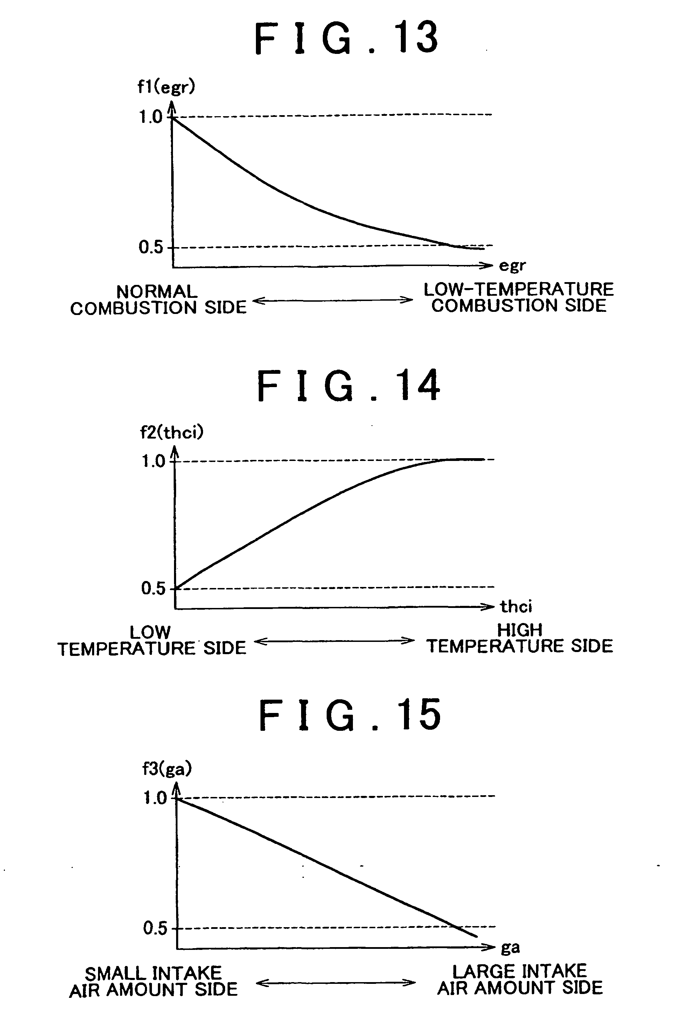

Here, the combustion mode coefficient f1 (egr) is obtained based on an EGR rate egr using the combustion mode coefficient map shown in FIG. 13, which is set based on an experiment. As the EGR rate increases, the combustion mode coefficient f1 (egr) decreases. Accordingly, the coefficient Kd and the determination value Qadj in the low-temperature combustion mode are lower than those in the normal combustion mode. The EGR rate is higher in the low-temperature combustion mode is higher than that in the normal combustion mode. In the low-temperature combustion mode in the embodiment, since the reducing agent supply amount is small, the effect of the adherence of the reducing agent and like are likely to be large. Particularly, in the low-temperature combustion mode, part of the reducing agent may flow to the exhaust gas re-circulation side due to re-circulation of a large amount of exhaust gas. The detection accuracy needs to be increased in consideration of these facts. The difference between the low-temperature combustion mode and the normal combustion mode is regarded as the difference between the EGR rate and egr, and the determination value Qadj is corrected according to the EGR rate egr, and is used.

Instead of using the EGR rate egr, whether low-temperature combustion mode or the normal combustion mode is performed may be directly determined based on the combustion mode control. The coefficient Kd may be set in stages such that the coefficient Kd is smaller than that in the normal combustion mode.

A catalyst bed temperature coefficient f2 (thci) is obtained based on the catalyst bed temperature thci, using the catalyst bed temperature coefficient map shown in FIG. 14 set based on an experiment. The catalyst bed temperature thci may be obtained based on the value detected by the first exhaust temperature sensor 44 or the second exhaust temperature sensor 46, or may be obtained based on the exhaust gas temperature calculated based on the amount of fuel injected from the fuel injection valve 58 and the entire rotational speed NE using the map.

The effect of the reducing agent supply amount on the value detected by the second air-fuel ratio sensor 48 varies depending on the bed temperature of the catalysts in the catalytic converters 36, and 38. When the catalyst bed temperature is low, the supplied reducing agent adheres to the exhaust passage 34 and the like and the inside of the catalysts in the catalytic converters 36 and 38, and therefore, a change due to the reducing agent supply amount is suppressed and the appears in the value detected by the second air-fuel ratio sensor 48. Accordingly, as the catalyst bed temperature decreases, the coefficient Kd is set to a smaller value.

The intake air amount coefficient f3 (ga) is obtained based on the intake air amount ga, using the intake air amount coefficient map shown in FIG 15, which is set based on an experiment. The exhaust gas flow amount changes according to the intake air amount ga. The effect of the reducing agent supply amount on the value detected by the second air-fuel ratio sensor 48 varies depending on the exhaust gas flow amount. Namely, as the intake air amount ga increases, the exhaust gas flow amount increases, and the exhaust gas flows to the exhaust system at a higher speed. At such a high speed, the change due to the reducing agent supply amount is suppressed and then appears in the value detected by the second air-fuel ratio sensor 48. Therefore, the determination value Qadj is corrected so as to decrease as the intake air amount ga increases, and is used.

The relationship between the above-mentioned structure and claims is the same as that in the first embodiment. According to the third embodiment which has been described so far, the same effects as the effects (1) to (8) in the first embodiment can be obtained, and also the following effects can be obtained.

(9) As described above, the determination value Qadj is corrected based on the EGR rate egr (or the combustion mode), the catalyst bed temperature thci and the intake air amount ga, in consideration of the effect on the value detected by the second air-fuel ratio sensor 48. Accordingly, comparison can be made with high accuracy, and a determination can be made with higher accuracy [0153] Hereafter, other embodiments will be described. (a)In the third embodiment, the determination value Qadj in the first embodiment is corrected using the coefficient Kd. However, the determination value Qadj in the second embodiment may be corrected using the coefficient Kd. Namely, the determination value Qadj is calculated according to the following equation "13" in step S 164.

$$Qadj \leftarrow Kd \times Qadf \qquad \text{[Equation 13]}$$

Thus, the determination value Qadj can be set to a value which is obtained by correcting the instructed supply amount Qadf based on the EGR rate egr (or the combustion mode), the catalyst bed temperature thci and the intake air amount ga in consideration of the effect on the value detected by the air-fuel ratio sensor. As a result, a determination can be made more accurately.

(b) In the above-mentioned embodiments, the second air-fuel ratio sensor 48 provided downstream from the catalyst which reduces NOx using the reducing agent and removes PM is used, in order to detect the error in the amount of reducing agent supplied from the supply valve 68. The air-fuel ratio sensor provided downstream from the supply valve 68 can detect the air-fuel ratio which is affected by the supply amount. Therefore, the first air-fuel ratio sensor 42 provided upstream from these catalysts may be used.

(c) In the above-mentioned embodiments, the air-fuel ratio change detecting period starts from the time when a supply instruction is provided to the supply valve 68. However, since there is time lag from when the reducing agent is supplied until when the supply appears in the value detected by the air-fuel ratio sensor, the air-fuel ratio change detecting period may be started after the supply instruction is provided. For example, the time lag may be set to a smaller value as the intake air amount increases, and the air-fuel ratio change detecting period may start when the time lag period has elapsed since the supply instruction is provided.

Also, the time lag period may be set such that the air-fuel ratio change detecting period starts after a certain degree of air-fuel ratio decrease due to the reducing agent supply occurs at the air-fuel ratio sensor portion. Thus, instead of performing calculation such that the estimated supply amount Qades can be obtained only in the region where the air-fuel ratio is equal to or lower than "20" as in the first embodiment, by performing calculation as in the second embodiment, a supply error can be detected with higher accuracy.

(d) In the third embodiment, instead of the catalyst bed temperature coefficient f2 (thci), the exhaust system temperature coefficient may be used. The exhaust system temperature coefficient corresponds to the temperature of the exhaust system, that is, the temperatures of the exhaust manifold 32, the exhaust turbine 16b, the exhaust passage 34, and the catalytic converters 36, 38 and 40. In this case, the value detected by the first exhaust temperature sensor 44 or the second exhaust temperature sensor 46 is used as the exhaust system temperature. The exhaust system temperature coefficient is obtained according to the exhaust system temperature using a map similar to that in FIG. 14, and is used for the equation "12" for calculating the coefficient Kd.

(e) In the above-mentioned embodiments, in the condition (3) included in the precondition, as the combustion mode in which the air-fuel ratio change can be detected, the normal combustion mode and the low-temperature combustion mode are mentioned. However, in the first and second embodiments, the low-temperature combustion mode may be excluded, and only the normal combustion mode may be used. As described in the third embodiment, in the low temperature combustion mode, part of the reducing agent supplied from the supply valve 68 may flow to the EGR passage side, since a large amount of exhaust gas flows to the EGR passage 20 side. However, by excluding the low-temperature combustion mode from the condition (3), determination is not made in such a case. Therefore, determination can be made with higher accuracy.

**Claims**

1.   A reducing agent supply error detecting method for detecting an error between an instructed supply amount (Qadf), which is given to a reducing agent supply mechanism (68), and an amount of reducing agent actually supplied from the reducing agent supply mechanism (68), when the reducing agent is supplied into an exhaust system by the reducing agent supply mechanism (68) from the upstream of an exhaust gas control catalyst (36, 38) which is provided in the exhaust system of an internal combustion engine (2), in order to recover a purifying ability of the exhaust gas control catalyst (36, 38) through a reduction process, **characterized by** comprising:

     a step (S186) in which an estimated amount of reducing agent (Qades) supplied from the reducing agent supply mechanism (68) is obtained by periodically accumulating a reducing agent supply amount corresponding value which corresponds to a change amount in an air-fuel ratio in the exhaust system; and
     a step (S 190) in which a supply error is then detected by comparing the estimated supply amount (Qades) with the instructed supply amount (Qadf) or a determination value (Qadj) based on the instructed supply amount (Qadf).

2.   The reducing agent supply error detecting method according to claim 1, **characterized by** further comprising:

     a step (S 192) in which it is determined that an abnormality has occurred in the reducing agent supply mechanism (68), when the supply error is out of a reference range.

3.   A reducing agent supply error detecting apparatus which detects a difference between an instructed supply amount (Qadf), which is given to a reducing agent supply mechanism (68), and an amount of reducing agent actually supplied from the reducing agent supply mechanism (68), in an internal combustion engine (2) including an exhaust gas control catalyst (36, 38) provided in an exhaust system and the reducing agent supply mechanism (68) which supplies the reducing agent to the exhaust system thereby recovering a purifying ability of the exhaust gas control catalyst (36, 38) through a reduction process, **characterized by** comprising:

     an air-fuel ratio sensor (48) provided downstream from the reducing agent supply mechanism (68) in the exhaust system;
     air-fuel ratio change detecting period setting means (S188) for setting an air-fuel ratio change detecting period which starts after a supply instruction is provided to the reducing agent supply mechanism (68);
     reducing agent estimated supply amount calculating means (S186) for calculating an estimated amount of reducing agent (Qades) supplied from the reducing agent supply mechanism (68) by periodically accumulating a reducing agent supply amount corresponding value that corresponds to a difference between a base air-fuel ratio (afx) and a first air-fuel ratio (afa) detected by the air-fuel ratio sensor (48) during the air-fuel ratio change detecting period, using a second air-fuel ratio detected by the air-fuel ratio sensor (48) before a start of the air-fuel ratio change detecting period set by the air-fuel ratio change detecting period setting means or a third air-fuel ratio which is lower than the second air-fuel ratio, as the base air-fuel ratio (afx); and
     error detecting means (S190) for detecting a supply error by comparing the estimated supply amount (Qades) calculated by the reducing agent estimated supply amount calculating means with the instructed supply amount (Qadf), which is given to the reducing agent supply mechanism (68), or a determination value (Qadj) based on the instructed supply amount (Qadf).

4. The reducing agent supply error detecting apparatus according to claim 3, **characterized in that** the reducing agent estimated supply amount calculating means (S 186) calculates the reducing agent supply amount corresponding value based on the difference between the base air-fuel ratio (afx) and the first air-fuel ratio (afa) and an exhaust gas flow amount corresponding value which can be obtained according to an operation state of the internal combustion engine (2).

5. The reducing agent supply error detecting apparatus according to claim 4, **characterized in that** the exhaust gas flow amount corresponding value is an intake air amount (ga) of the internal combustion engine (2).

6. The reducing agent supply error detecting apparatus according to any one of claim 3 to claim 5, **characterized by** further comprising:

abnormality determining means (S 192) for determining that an abnormality has occurred in the reducing agent supply mechanism (68), when the supply error is out of a reference range.

7. The reducing agent supply error detecting apparatus according to claim 6, **characterized in that** the error detecting means corrects the instructed supply amount (Qadf) or the determination value (Qadj) based on the intake air amount (ga) of the internal combustion engine (2).

8. The reducing agent supply error detecting apparatus according to claim 7, **characterized in that** the error detecting means corrects the instructed supply amount (Qadf) or the determination value (Qadj) such that the instructed supply amount (Qadf) or the determination value (Qadj) decreases as the intake air amount (ga) of the internal combustion engine (2) increases.

9. The reducing agent supply error detecting apparatus according to any one of claim 6 to claim 8, **characterized in that** the error detecting means corrects the instructed supply amount (Qadf) or the determination value (Qadj) based on a temperature of the exhaust system of the internal combustion engine (2) or a bed temperature (thci) of the exhaust gas control catalyst (36, 38).

10. The reducing agent supply error detecting apparatus according to claim 9, **characterized in that** the error detecting means corrects the instructed supply amount (Qadf) or the determination value (Qadj) such that the instructed supply amount (Qadf) or the determination value (Qadj) decreases as the temperature of the exhaust system of the internal combustion engine (2) or the bed temperature (thci) of the exhaust gas control catalyst (36, 38) decreases.

11. The reducing agent supply error detecting apparatus according to any one of claim 6 to claim 10, **characterized in that** the internal combustion engine (2) is provided with a normal combustion mode, in which exhaust gas is re-circulated normally, and a low temperature combustion mode, in which combustion is performed at a low temperature compared with the normal combustion mode by re-circulating exhaust gas whose amount is large compared with the normal combustion mode, and the error detecting means corrects the instructed supply amount (Qadf) or the determination value (Qadj) depending on a combustion mode of the internal combustion engine (2).

12. The reducing agent supply error detecting apparatus according to claim 11, **characterized in that** the error detecting means corrects the instructed supply amount (Qadf) or the determination value (Qadj) such that the instructed supply amount (Qadf) or the determination value (Qadj) in the low temperature combustion mode is smaller than that in the normal combustion mode.

13. The reducing agent supply error detecting apparatus according to any one of claim 6 to claim 12, **characterized in that**, in the case where the instructed supply amount (Qadf) or the determination value (Qadj) is smaller than a reference supply amount, the abnormality determining means does not determine that an abnormality has occurred in the reducing agent supply mechanism (68) even when the supply error becomes lower than the lower limit of the reference range.

14. The reducing agent supply error detecting apparatus according to any one of claim 3 to claim 13, **characterized in that**, when a new supply instruction is provided to the reducing agent supply mechanism (68) during the air-fuel ratio change detecting period, a process performed by the reducing agent estimated supply amount calculating means, the error detecting means or the abnormality determining means is stopped.

**15.** The reducing agent supply error detecting apparatus according to any one of claim 3 to claim 14, **characterized in that**, when a change amount in the operation state of the internal combustion engine (2) becomes larger than a reference change amount, the process performed by the reducing agent estimated supply amount calculating means, the error detecting means or the abnormality determining means is stopped.

**16.** The reducing agent supply error detecting apparatus according to claim 15, **characterized in that** the change amount in the operation state of the internal combustion engine (2) is a change amount in an intake air amount of the internal combustion engine (2) or a change amount in an amount of fuel burned in the internal combustion engine (2).

**17.** The reducing agent supply error detecting apparatus according to any one of claim 3 to claim 16, **characterized in that**, during a period in which effect of the previous reducing agent supply performed by the reducing agent supply mechanism (68) remains on the air-fuel ratio, the process performed by the reducing agent estimated supply amount calculating means, the error detecting means or the error determining means is stopped.

**18.** The reducing agent supply error detecting apparatus according to claim 17, **characterized in that** the period in which the effect of the previous reducing agent supply performed by the reducing agent supply mechanism (68) remains on the air-fuel ratio is set based on time that has elapsed since the reducing agent is supplied previously or an intake air amount that has been accumulated since the reducing agent is supplied previously.

**19.** The reducing agent supply error detecting apparatus according to any one of claim 3 to claim 18, **characterized in that** the air-fuel ratio sensor (48) is provided downstream from the exhaust gas control catalyst (36, 38) in the exhaust system.

**20.** The reducing agent supply error detecting apparatus according to any one of claim 3 to claim 19, **characterized in that** the internal combustion engine (2) is a diesel engine, and the exhaust gas control catalyst (36, 38) is a NOx storage reduction catalyst.

**Patentansprüche**

**1.** Reduktionsmittelzufuhrfehlererfassungsverfahren zum Erfassen eines Fehlers zwischen einer angewiesenen Zufuhrmenge (Qadf), die an einen Reduktionsmittelzufuhrmechanismus (68) abgegeben wird, und einer Menge eines Reduktionsmittels, das tatsächlich von dem Reduktionsmittelzufuhrmechanismus (68) zugeführt wird, wenn das Reduktionsmittel in ein Abgassystem durch den Reduktionsmittelzufuhrmechanismus (68) von stromaufwärts eines Abgassteuerungskatalysators (36, 38) zugeführt wird, der in dem Abgassystem einer Brennkraftmaschine (2) vorgesehen ist, um eine Reinigungsfähigkeit des Abgassteuerungskatalysators (36, 38) durch einen Reduktionsprozess wiederherzustellen,
**gekennzeichnet durch**:

einen Schritt (S186), bei dem eine geschätzte Menge des Reduktionsmittels (Qades), das von dem Reduktionsmittelzufuhrmechanismus (68) zugeführt wird, **durch** periodisches Akkumulieren einer Reduktionsmittelzufuhrmenge entsprechend einem Wert erhalten wird, der einer Änderungsmenge eines Luft-Kraftstoff-Verhältnisses in dem Abgassystem entspricht; und
einen Schritt (S190), bei dem ein Zufuhrfehler dann **durch** Vergleichen der geschätzten Zufuhrmenge (Qades) mit der angewiesenen Zufuhrmenge (Qadf) oder einem Bestimmungswert (Qadj) auf der Grundlage der angewiesenen Zufuhrmenge (Qadf) erfasst wird.

**2.** Reduktionsmittelzufuhrfehlererfassungsverfahren gemäß Anspruch 1, des weiteren **gekennzeichnet durch**:

einen Schritt (S192), bei dem bestimmt wird, dass eine Abnormität bei dem Reduktionsmittelzufuhrmechanismus (68) aufgetreten ist, wenn der Zufuhrfehler außerhalb eines Referenzbereiches liegt.

**3.** Reduktionsmittelzufuhrfehlererfassungsvorrichtung, die eine Differenz zwischen einer angewiesenen Zufuhrmenge (Qadf), die zu einem Reduktionsmittelzufuhrmechanismus (68) abgegeben wird, und einer Menge des Reduktionsmittels erfasst, die tatsächlich von dem Reduktionsmittelzufuhrmechanismus (68) zugeführt wird, bei einer Brennkraftmaschine (2) mit einem Abgassteuerungskatalysator (36, 38), der in einem Abgassystem vorgesehen ist, und dem Reduktionsmittelzufuhrmechanismus (68), der das Reduktionsmittel zu dem Abgassystem zuführt, um **dadurch** eine Reinigungsfähigkeit des Abgassteuerungskatalysators (36, 38) durch einen Reduktionsprozess wiederherzustellen, **gekennzeichnet durch**:

einen Luft-Kraftstoff-Verhältnis-Sensor (48) der stromabwärts von dem Reduktionsmittelzufuhrmechanismus (68) in dem Abgassystem vorgesehen ist;

eine Luft-Kraftstoff-Verhältnis-Änderungserfassungsdauereinstelleinrichtung (S188) zum Einstellen einer Luft-Kraftstoff-Verhältnis-Änderungserfassungsdauer, die beginnt, nachdem eine Zufuhranweisung an den Reduktionsmittelzufuhrmechanismus (68) bereitgestellt wird;

eine Reduktionsmittelschätzzufuhrmengenberechnungseinrichtung (S186) zum Berechnen einer geschätzten Menge eines Reduktionsmittels (Qades), das von dem Reduktionsmittelzufuhrmechanismus (68) zugeführt wird, **durch** periodisches Akkumulieren einer Reduktionsmittelzufuhrmenge entsprechend einem Wert, der einer Differenz zwischen einem Basis-Luft-Kraftstoff-Verhältnisses (afx) und einem ersten Luft-Kraftstoff-Verhältnis (afa) entspricht, das **durch** den Luft-Kraftstoff-Verhältnis-Sensor (48) während der Luft-Kraftstoff-verhältnis-Änderungserfassungsdauer erfasst wird, unter Verwendung eines zweiten Luft-Kraftstoff-Verhältnisses, das **durch** den Luft-Kraftstoff-Verhältnis-Sensor (48) vor einem Beginn der Luft-Kraftstoff-Verhältnis-Änderungserfassungsdauer erfasst wird, die **durch** die Luft-Kraftstoff-Verhältnis-Änderungserfassungsdauereinsstelleinrichtung eingestellt wird, oder eines dritten Luft-Kraftstoff-Verhältnisses, das niedriger als das zweite Luft-Kraftstoff-Verhältnis ist, als Basisluft-Kraftstoff-Verhältnis (afx); und

eine Fehlererfassungseinrichtung (S190) zum Erfassen eines Zufuhrfehlers **durch** Vergleichen der geschätzten Zufuhrmenge (Qades), die **durch** die Reduktionsmittelschätzzufuhrmengenberechnungseinrichtung berechnet wird, mit der angewiesenen Zufuhrmenge (Qadf), die an den Reduktionsmittelzufuhrmechanismus (68) abgegeben wird, oder einem Bestimmungswert (Qadj) auf der Grundlage der angewiesenen Zufuhrmenge (Qadf).

4. Reduktionsmittelzufuhrfehlererfassungsvorrichtung gemäß Anspruch 3, **dadurch kennzeichnet, dass** die Reduktionsmittelschätzzufuhrmengenberechnungseinrichtung (S186) die Reduktionsmittelzufuhrmenge entsprechend einem Wert auf der Grundlage der Differenz zwischen dem BasisLuft-Kraftstoff-Verhältnis (afx) und dem ersten Luft-Kraftstoff-Verhältnis (afa) sowie einer Abgasdurchflussmenge entsprechend einem Wert berechnet, der gemäß einem Betriebszustand der Brennkraftmaschine (2) erhalten werden kann.

5. Reduktionsmittelzufuhrfehlererfassungsvorrichtung gemäß Anspruch 4, **dadurch gekennzeichnet, dass** der der Abgasdurchflussmenge entsprechende Wert eine Einlassluftmenge (ga) der Brennkraftmaschine (2).

6. Reduktionsmittelzufuhrfehlererfassungsvorrichtung gemäß einem der Ansprüche 3 bis 5, des weiteren **gekennzeichnet durch**:

eine Abnormitätsbestimmungseinrichtung (S192) zum Bestimmen, dass eine Abnormität bei dem Reduktionsmittelzufuhrmechanismus (68) aufgetreten ist, wenn der Zufuhrfehler außerhalb eines Referenzbereichs liegt.

7. Reduktionsmittelzufuhrfehlererfassungsvorrichtung gemäß Anspruch 6, **dadurch gekennzeichnet, dass** die Fehlererfassungseinrichtung die angewiesene Zufuhrmenge (Qadf) oder den Bestimmungswert (Qadj) auf der Grundlage der Einlassluftmenge (ga) der Brennkraftmaschine (2) korrigiert.

8. Reduktionsmittelzufuhrfehlererfassungsvorrichtung gemäß Anspruch 7, **dadurch gekennzeichnet, dass** die Fehlererfassungseinrichtung die angewiesene Zufuhrmenge (Qadf) oder den Bestimmungswert (Qadj) derart korrigiert, dass die angewiesene Zufuhrmenge (Qadf) oder der Bestimmungswert (Qadj) sich verringert, wenn die Einlassluftmenge (ga) der Brennkraftmaschine (2) sich vergrößert.

9. Reduktionsmittelzufuhrfehlererfassungsvorrichtung gemäß einem der Ansprüche 6 bis 8, **dadurch gekennzeichnet, dass** die Fehlererfassungseinrichtung die angewiesene Zufuhrmenge (Qadf) oder den Bestimmungswert (Qadj) auf der Grundlage einer Temperatur des Abgassystems der Brennkraftmaschine (2) oder einer Betttemperatur (thci) des Abgassteuerungskatalysators (36, 38) korrigiert.

10. Reduktionsmittelzufuhrfehlererfassungsvorrichtung gemäß Anspruch 9, **dadurch gekennzeichnet, dass** die Fehlererfassungseinrichtung die angewiesene Zufuhrmenge (Qadf) oder den Bestimmungswert (Qadj) derart korrigiert, dass die angewiesene Zufuhrmenge (Qadf) oder der Bestimmungswert (Qadj) sich verringert, wenn sich die Temperatur des Abgassystems der Brennkraftmaschine (2) oder die Betttemperatur (thci) des Abgassteuerungskatalysators (36, 38) verringert.

**11.** Reduktionsmittelzufuhrfehlererfassungsvorrichtung gemäß einem von Anspruch 6 bis Anspruch 10, **dadurch gekennzeichnet, dass** die Brennkraftmaschine (2) mit einer normalen Verbrennungsbetriebsart, bei der das Abgas normal rezirkuliert wird, und einer Niedrigtemperaturverbrennungsbetriebsart versehen ist, bei der die Verbrennung bei einer niedrigen Temperatur im Vergleich mit der normalen Verbrennungsbetriebsart durch Rezirkulieren von Abgas durchgeführt wird, dessen Menge im Vergleich mit der normalen Verbrennungsbetriebsart groß ist, und wobei die Fehlererfassungseinrichtung die angewiesene Zufuhrmenge (Qadf) oder den Bestimmungswert (Qadj) in Abhängigkeit von einer Verbrennungsbetriebsart der Brennkraftmaschine (2) korrigiert.

**12.** Reduktionsmittelzufuhrfehlererfassungsvorrichtung gemäß Anspruch 11, **dadurch gekennzeichnet, dass** die Fehlererfassungseinrichtung die angewiesene Zufuhrmenge (Qadf) oder den Bestimmungswert (Qadj) derart korrigiert, dass die angewiesene Zufuhrmenge (Qadf) oder der Bestimmungswert (Qadj) in der Niedertemperaturverbrennungsbetriebsart kleiner als diejenige in der normalen Verbrennungsbetriebsart ist.

**13.** Reduktionsmittelzufuhrfehlererfassungsvorrichtung gemäß einem von Anspruch 6 bis Anspruch 12, **dadurch gekennzeichnet, dass** in dem Fall, dass die angewiesene Zufuhrmenge (Qadf) oder der Bestimmungswert (Qadj) kleiner als eine Referenzzufuhrmenge ist, die Abnormitätsbestimmungseinrichtung nicht bestimmt, dass eine Abnormität bei dem Reduktionsmittelzufuhrmechanismus (68) aufgetreten ist, auch wenn der Zufuhrfehler geringer als die untere Grenze des Referenzbereichs wird.

**14.** Reduktionsmittelzufuhrfehlererfassungsvorrichtung gemäß einem von Anspruch 3 bis Anspruch 13, **dadurch gekennzeichnet, dass**, wenn eine neue Zufuhranweisung für den Reduktionsmittelzufuhrmechanismus (68) während der Luft-Kraftstoff-Verhältnis-Änderungserfassungsdauer bereitgestellt wird, ein Prozess, der durch die Reduktionsmittelschätzzufuhrmengenberechnungseinrichtung, die Fehlererfassungseinrichtung oder die Abnormitätsbestimmungseinrichtung durchgeführt wird, angehalten wird.

**15.** Reduktionsmittelzufuhrfehlererfassungsvorrichtung gemäß einem von Anspruch 3 bis Anspruch 14, **dadurch gekennzeichnet, dass**, wenn ein Änderungsbetrag des Betriebszustands der Brennkraftmaschine (2) größer als ein Referenzänderungsbetrag wird, der Prozess, der durch die Reduktionsmittelschätzzufuhrmengenberechnungseinrichtung, die Fehlererfassungseinrichtung oder die Abnormitätsbestimmungseinrichtung durchgeführt wird, angehalten wird.

**16.** Reduktionsmittelzufuhrfehlererfassungsvorrichtung gemäß Anspruch 15, **dadurch gekennzeichnet, dass** der Änderungsbetrag des Betriebszustands der Brennkraftmaschine (2) ein Änderungsbetrag einer Einlassluftmenge der Brennkraftmaschine (2) oder ein Änderungsbetrag einer Menge von in der Brennkraftmaschine (2) verbrannten Kraftstoff ist.

**17.** Reduktionsmittelzufuhrfehlererfassungsvorrichtung gemäß einem von Anspruch 3 bis Anspruch 16, **dadurch gekennzeichnet, dass** während einer Dauer, in der eine Wirkung der vorhergehenden Reduktionsmittelzufuhr, die durch den Reduktionsmittelzufuhrmechanismus (68) durchgeführt wird, auf das Luft-Treibstoff-Verhältnis verbleibt, der Prozess, der durch die Reduktionsmittelschätzzufuhrmengenberechnungseinrichtung, die Fehlererfassungseinrichtung oder die Fehlerbestimmungseinrichtung durchgeführt wird, angehalten wird.

**18.** Reduktionsmittelzufuhrfehlererfassungsvorrichtung gemäß Anspruch 17, **dadurch gekennzeichnet, dass** die Dauer, in der die Wirkung der vorhergehenden Reduktionsmittelzufuhr, die durch den Reduktionsmittelzufuhrmechanismus (68) durchgeführt wird, auf dem Luft-Kraftstoff-Verhältnis verbleibt, auf der Grundlage einer Zeit, die abgelaufen ist, seit das Reduktionsmittel vorhergehend zugeführt wurde, oder einer Einlassluftmenge, die akkumuliert wurde, seit das Reduktionsmittel vorhergehend zugeführt wurde, eingerichtet wird.

**19.** Reduktionsmittelzufuhrfehlererfassungsvorrichtung gemäß einem von Anspruch 3 bis Anspruch 18, **dadurch gekennzeichnet, dass** der Luft-Kraftstoff-Verhältnis-Sensor (48) stromabwärts von dem Abgassteuerungskatalysator (36, 38) in dem Abgassystem vorgesehen ist.

**20.** Reduktionsmittelzufuhrfehlererfassungsvorrichtung gemäß einem von Anspruch 3 bis Anspruch 19, **dadurch gekennzeichnet, dass** die Brennkraftmaschine (2) ein Dieselverbrennungsmotor ist und der Abgassteuerungskatalysator (36, 38) ein $NO_x$-Speicherreduktionskatalysator ist.

**EP 1 505 271 B1**

**Revendications**

1. Procédé de détection d'erreur d'alimentation d'un agent réducteur permettant de détecter une erreur entre une quantité ordonnée d'alimentation (Qadf), qui est donnée à un mécanisme d'alimentation d'agent réducteur (68), et une quantité d'agent réducteur effectivement alimentée par le mécanisme d'alimentation d'agent réducteur (68), lorsque l'agent réducteur est alimenté dans un système d'échappement par le mécanisme d'alimentation d'agent réducteur (68) depuis l'amont du catalyseur d'échappement (36, 38) qui est fourni dans le système d'échappement d'un moteur à combustion interne (2), afin de restaurer une capacité de purification du catalyseur d'échappement (36, 38) par un processus de réduction, **caractérisé en ce qu'**il comprend :

   une étape (S186) où une quantité estimée d'agent réducteur (Qades) alimentée par le mécanisme d'alimentation d'agent réducteur (68) est obtenue en accumulant périodiquement une valeur correspondante de quantité d'alimentation d'agent réducteur correspondant à une quantité de variation du rapport air-carburant dans le système d'échappement ; et

   une étape (S190) où une erreur d'alimentation est alors détectée en comparant la quantité estimée d'alimentation (Qades) à la quantité ordonnée d'alimentation (Qadf) ou à une valeur de détermination (Qadj) basée sur la quantité ordonnée d'alimentation (Qadf).

2. Procédé de détection d'erreur d'alimentation d'un agent réducteur selon la revendication 1, **caractérisé en ce qu'**il comprend en outre :

   une étape (S192) où il est déterminé qu'une anomalie s'est produite dans le mécanisme d'alimentation d'agent réducteur (68), lorsque l'erreur d'alimentation se trouve hors d'une plage de référence.

3. Dispositif de détection d'erreur d'alimentation d'un agent réducteur permettant de détecter une différence entre une quantité ordonnée d'alimentation (Qadf), qui est donnée à un mécanisme d'alimentation d'agent réducteur (68), et une quantité d'agent réducteur effectivement alimentée par le mécanisme d'alimentation d'agent réducteur (68), dans un moteur à combustion interne (2) comportant un catalyseur d'échappement (36, 38) fourni dans un système d'échappement et le mécanisme d'alimentation d'agent réducteur (68) qui alimente l'agent réducteur au système d'échappement recouvrant ainsi la capacité de purification du catalyseur d'échappement (36, 38) par un processus de réduction, **caractérisé en ce qu'**il comprend :

   un capteur de rapport air-carburant (48) placé à l'aval du mécanisme d'alimentation d'agent réducteur (68) dans le système d'échappement ;

   un moyen de réglage de la période de détection de la variation du rapport air-carburant (S188) permettant de régler un période de détection de la variation du rapport air-carburant qui débute après qu'un ordre d'alimentation a été donné au mécanisme d'alimentation d'agent réducteur (68) ;

   un moyen de calculer la quantité estimée d'alimentation d'agent réducteur (S186) permettant de calculer une quantité estimée d'agent réducteur (Qades) fournie par le mécanisme d'alimentation d'agent réducteur (68) en accumulant périodiquement une quantité d'alimentation d'agent réducteur correspondant à une différence entre un rapport air-carburant de base (afx) et un premier rapport air-carburant (afa) détectée par le capteur de rapport air-carburant (48) pendant la période de détection de la variation du rapport air-carburant, en utilisant un deuxième rapport air-carburant détecté par le capteur de rapport air-carburant (48) avant le début de la période de détection de la variation du rapport air-carburant réglée par le moyen de réglage de la période de détection de la variation du rapport air-carburant ou un troisième rapport air-carburant qui es plus faible que le deuxième rapport air-carburant, comme rapport air-carburant de base (afx) ; et

   un moyen de détection d'erreur (S190) permettant de détecter une erreur d'alimentation en comparant la quantité estimée d'alimentation (Qades) calculée par le moyen de calculer la quantité estimée d'alimentation d'agent réducteur à la quantité ordonnée d'alimentation (Qadf), qui est donnée au mécanisme d'alimentation d'agent réducteur (68), ou à une valeur de détermination (Qadj) basée sur la quantité ordonnée d'alimentation (Qadf).

4. Dispositif de détection d'erreur d'alimentation d'un agent réducteur selon la revendication 3, **caractérisé en ce que** le moyen de calculer la quantité estimée d'alimentation d'agent réducteur (S186) calcule la valeur correspon-

**EP 1 505 271 B1**

dante de la quantité d'alimentation d'agent réducteur basée sur la différence entre le rapport air-carburant de base (afx) et le premier rapport air-carburant (afa) et une valeur correspondante de la quantité de débit de gaz d'échappement qui peut être obtenue selon un état de fonctionnement du moteur à combustion interne (2).

**5.** Dispositif de détection d'erreur d'alimentation d'un agent réducteur selon la revendication 4, **caractérisé en ce que** la valeur correspondante de quantité de débit de gaz d'échappement est une quantité d'air d'admission (ga) du moteur à combustion interne (2).

**6.** Dispositif de détection d'erreur d'alimentation d'un agent réducteur selon l'une quelconque de la revendication 3 à la revendication 5, **caractérisé en ce qu'**il comprend en outre : un moyen de détection d'anomalies (S192) permettant de déterminer qu'une anomalie s'est produite dans le mécanisme d'alimentation d'agent réducteur (68), lorsque l'erreur d'&alimentation se trouve hors d'une plage de référence.

**7.** Dispositif de détection d'erreur d'alimentation d'un agent réducteur selon la revendication 6, **caractérisé en ce que** le moyen de détection d'erreur corrige la quantité ordonnée d'alimentation (Qadf) ou la valeur de détermination (Qadj) basée sur la quantité d'air d'admission (pa) du moteur à combustion interne (2).

**8.** Dispositif de détection d'erreur d'alimentation d'un agent réducteur selon la revendication 7, **caractérisé en ce que** le moyen de détection d'erreur corrige la quantité ordonnée d'alimentation (Qadt) ou la valeur de détermination (Qadj) de telle manière que la quantité ordonnée d'alimentation (Qadt) ou la valeur de détermination (Qadj) diminue lorsque la quantité d'air d'admission (ga) du moteur à combustion interne (2) augmente.

**9.** Dispositif de détection d'erreur d'alimentation d'un agent réducteur selon l'une quelconque de la revendication 6 à la revendication 8, **caractérisé en ce que** le moyen de détection d'erreur corrige la quantité ordonnée d'alimentation (Qadf) ou la valeur de détermination (Qadj) basée sur une température du système d'échappement du moteur à combustion interne (2) ou une température de lit (thci) du catalyseur d'échappement (36, 38).

**10.** Dispositif de détection d'erreur d'alimentation d'un agent réducteur selon la revendication 9, **caractérisé en ce que** le moyen de détection d'erreur corrige la quantité ordonnée d'alimentation (Qadf) ou la valeur de détermination (Qadj) de telle manière que la quantité ordonnée d'alimentation (Qadt) ou la valeur de détermination (Qadj) diminue lorsque la température du système d'échappement du moteur à combustion interne (2) ou la température de lit (thci) du catalyseur d'échappement (36,38) diminue.

**11.** Dispositif de détection d'erreur d'alimentation d'un agent réducteur selon l'une quelconque de la revendication 6 à la revendication 10, **caractérisé en ce que** le moteur à combustion interne (2) est muni d'un mode de combustion normale, dans lequel le gaz d'échappement est recirculé normalement, et un mode de combustion à basse température, dans lequel la combustion est effectuée à une basse température en comparaison au mode de combustion normale en faisant recirculer le gaz d'échappement dont la quantité est grande en comparaison au mode de combustion normale, et le moyen de détection d'erreur corrige la quantité ordonnée d'alimentation (Qadf) ou la valeur de détermination (Qadj) en fonction du mode de combustion du moteur à combustion interne (2).

**12.** Dispositif de détection d'erreur d'alimentation d'un agent réducteur selon la revendication 11, **caractérisé en ce que** le moyen de détection d'erreur corrige la quantité ordonnée d'alimentation (Qadt) ou la valeur de détermination (Qadj) de telle manière que la quantité ordonnée d'alimentation (Qadt) ou la valeur de détermination (Qadj) dans le mode de combustion à basse température soit inférieure à celle correspondant au mode de combustion normale.

**13.** Dispositif de détection d'erreur d'alimentation d'un agent réducteur selon l'une quelconque de la revendication 6 à la revendication 12, **caractérisé en ce que**, lorsque la quantité ordonnée d'alimentation (Qadf) ou la valeur de détermination (Qadj) est inférieure à une quantité d'alimentation de référence, le moyen de détermination des anomalies ne détermine pas qu'une anomalie s'est produite dans le mécanisme d'alimentation d'agent réducteur (68) même si l'erreur d'&alimentation devient inférieure à la limite inférieure de la plage de référence.

**14.** Dispositif de détection d'erreur d'alimentation d'un agent réducteur selon l'une quelconque de la revendication 3 à la revendication 13, **caractérisé en ce que**, lorsqu'un nouvel ordre d'alimentation est donné au mécanisme d'alimentation d'agent réducteur (68) pendant la période de détection de la variation du rapport air-carburant, un processus exécuté par le moyen de calculer la quantité estimée d'alimentation d'agent réducteur, le moyen de détection d'erreur ou le moyen de détermination des anomalies est arrêté.

**24**

**15.** Dispositif de détection d'erreur d'alimentation d'un agent réducteur selon l'une quelconque de la revendication 3 à la revendication 14, **caractérisé en ce que**, lorsque la quantité de variation de l'état de fonctionnement du moteur à combustion interne (2) devient supérieure à une quantité de variation de référence, le processus exécuté par le moyen de calculer la quantité estimée d'alimentation d'agent réducteur, le moyen de détection d'erreur ou le moyen de détermination des anomalies est arrêté.

**16.** Dispositif de détection d'erreur d'alimentation d'un agent réducteur selon la revendication 15, **caractérisé en ce que** la quantité de variation de l'état du moteur à combustion interne (2) est une quantité de variation de la quantité d'air d'admission du moteur à combustion interne (2) ou une quantité de variation d'une quantité de carburant brûlée dans le moteur à combustion interne (2).

**17.** Dispositif de détection d'erreur d'alimentation d'un agent réducteur selon l'une quelconque de la revendication 3 à la revendication 16, **caractérisé en ce que**, pendant une période où l'effet de l'alimentation précédente d'agent réducteur effectué par le mécanisme d'alimentation d'agent réducteur (68) persiste sur le rapport air-carburant, le processus exécuté par le moyen de calculer la quantité estimée d'alimentation d'agent réducteur, le moyen de détection d'erreur ou le moyen de détermination d'erreur est arrêté.

**18.** Dispositif de détection d'erreur d'alimentation d'un agent réducteur selon la revendication 17, **caractérisé en ce que** la période où l'effet de l'alimentation précédente d' agent réducteur effectuée par le mécanisme d'alimentation d'agent réducteur (68) persiste sur le rapport air-carburant est réglée en fonction du temps écoulé depuis que l'agent réducteur a été alimenté précédemment ou en fonction d'une quantité d'air d'admission qui s'est accumulée depuis que l'agent réducteur a été alimenté précédemment.

**19.** Dispositif de détection d'erreur d'alimentation d'un agent réducteur selon l'une quelconque de la revendication 3 la revendication 18, **caractérisé en ce que** le capteur de rapport air-carburant (48) est placé à l'aval du catalyseur d'échappement (36, 38) dans le système d'échappement.

**20.** Dispositif de détection d'erreur d'alimentation d'un agent réducteur selon l'une quelconque de la revendication 3 à la revendication 19, **caractérisé en ce que** le moteur à combustion interne (2) est un moteur diesel, et le catalyseur d'échappement (36, 38) est un catalyseur de réduction de stockage de NOx.

FIG.1

EP 1 505 271 B1

EP 1 505 271 B1

# F I G . 2

SUPPLY VALVE STATE DETECTION
PERFORMANCE CONDITION
DETERMINING PROCESS

S102
IS PRECONDITION
SATISFIED ?

NO

YES

S104
RESET VALUE SHOWN BY
PRECONDITION SATISFACTION
COUNTER TO "0"

S106
INCREASE VALUE SHOWN BY
PRECONDITION
SATISFACTION COUNTER

①

S105
SET DETECTION
PERFORMANCE FLAG TO "OFF"

S108
IS REDUCING
AGENT NEWLY SUPPLIED
FROM SUPPLY
VALVE ?

NO

YES

S110
IS DETECTION
PERFORMANCE CONDITION
SATISFIED?

NO

YES

①

S112
SET DETECTION
PERFORMANCE FLAG TO "ON"

RETURN

27

# FIG.3

```
   DETERMINATION VALUE
    SETTING PROCESS

           |
           v
                          S162
       IS DETECTION
     PERFORMANCE FLAG      NO
        "OFF" ?
           |
          YES

S164
   CALCULATE DETERMINATION
          VALUE

           |
           v
        RETURN
```

# F I G . 4A

```
        ┌─────────────────────────┐
        │    SUPPLY VALVE STATE    │
        │   DETERMINING PROCESS    │
        └─────────────────────────┘
                     │
                     ▼              S182
              ╱─────────────╲
             ╱  IS DETECTION  ╲        NO
            ╱ PERFORMANCE FLAG  ╲──────────────┐
             ╲    "ON" ?       ╱               │
              ╲───────────────╱                │
                     │ YES                     │
                     ▼         S186            │
        ┌─────────────────────────┐           │
        │  CALCULATE ESTIMATED SUPPLY │        │
        │  AMOUNT BASED ON VALUE      │        │
        │  OUTPUT FROM SECOND AIR-FUEL│        │
        │     RATIO SENSOR            │        │
        └─────────────────────────┘           │
                     │                          │         S184
                     ▼         S188             ▼
              ╱─────────────╲          ┌─────────────────────┐
             ╱  HAS AIR-FUEL  ╲   NO   │  SET ESTIMATED SUPPLY│
            ╱ RATIO CHANGE      ╲──────│   AMOUNT TO "0"      │
           ╱ DETECTING PERIOD    ╲     └─────────────────────┘
            ╲   ELAPSED ?       ╱                │
             ╲───────────────╱                   │
                     │ YES                       ▼
                     ▼         S190             ( 2 )
              ╱─────────────╲
             ╱  IS ESTIMATED  ╲     NO
            ╱ SUPPLY AMOUNT OUT ╲──────────────┐
            ╲ OF REFERENCE RANGE?╱             │
             ╲───────────────╱                 │
                     │ YES                      ▼
                     ▼                        ( 4 )
                   ( 3 )
```

# F I G . 4B

S192

WHEN ESTIMATED
SUPPLY AMOUNT IS SMALLER
THAN LOWER LIMIT OF
REFERENCE RANGE, DETERMINE.
WHETHER DETERMINATION
VALUE $\geqq$ REFERENCE VALUE ?

NO

YES

S194

DETERMINE THAT REDUCING
AGENT SUPPLY AMOUNT
IS ABNORMAL

S196

DETERMINE THAT
REDUCING AGENT SUPPLY
AMOUNT IS NORMAL

RESET DETECTION
PERFORMANCE FLAG TO "OFF" — S198

RETURN

# F I G . 5

# FIG.6

EP 1 505 271 B1

# FIG.7

PRECONDITION
SATISFACTION COUNTER

(3 SECONDS)

0

Qadtt,

SUPPLY OPEN
VALVE CLOSED

DETECTION ON
PERFORMANCE
FLAG OFF

AIR-FUEL
RATIO
CHANGE
DETECTING
PERIOD

ELAPSED TIME
AFTER REDUCING
AGENT IS SUPPLIED

(2 SECONDS)

0

AIR-FUEL RATIO
(SECOND AIR-FUEL
RATIO SENSOR)

afbase

D(afx)

【LEAN SIDE】

20

Qades

【RICH SIDE】

Qades

Qadjh
Qadj
Qadjl
REFERENCE
VALUE

(ABNORMAL
DETERMINATION)

t20      t21 t22          t23   TIME

33

# FIG.8

PRECONDITION SATISFACTION COUNTER

(3 SECONDS)

0

Qadtt

SUPPLY VALVE  OPEN  CLOSED

DETECTION PERFORMANCE FLAG  ON  OFF

AIR-FUEL RATIO CHANGE DETECTING PERIOD

ELAPSED TIME AFTER REDUCING AGENT IS SUPPLIED

(2 SECONDS)

0

AIR-FUEL RATIO (SECOND AIR-FUEL RATIO SENSOR)

afbase

D(afx)

【LEAN SIDE】

20

Qades

【RICH SIDE】

Qades

REFERENCE VALUE

Qadjh

Qadj

Qadjl

t30    t31  t32    t33    TIME

# F I G . 9

# FIG. 10

# FIG. 11

PRECONDITION
SATISFACTION COUNTER

(3 SECONDS)

0

Qadtt,

SUPPLY
VALVE

OPEN

CLOSED

DETECTION
PERFORMANCE
FLAG

ON

OFF

AIR-FUEL
RATIO
CHANGE
DETECTING
PERIOD

ELAPSED TIME
AFTER REDUCING
AGENT IS SUPPLIED

(2 SECONDS)

0

AIR-FUEL RATIO
(SECOND AIR-FUEL
RATIO SENSOR)

afbase

【LEAN SIDE】

20

Qades

【RICH SIDE】

Qadjh
Qadj
Qadjl
REFERENCE
VALUE

Qades

(ABNORMAL
DETERMINATION)

t60        t61  t62        t63    TIME

# FIG. 12

# FIG.13

f1(egr)

1.0

0.5

egr

NORMAL
COMBUSTION SIDE ⟷ LOW-TEMPERATURE
COMBUSTION SIDE

# FIG.14

f2(thci)

1.0

0.5

thci

LOW
TEMPERATURE SIDE ⟷ HIGH
TEMPERATURE SIDE

# FIG.15

f3(ga)

1.0

0.5

ga

SMALL INTAKE
AIR AMOUNT SIDE ⟷ LARGE INTAKE
AIR AMOUNT SIDE